(19) **Europäisches Patentamt / European Patent Office / Office européen des brevets**

(11) **EP 4 783 123 A1**

(12) **EUROPEAN PATENT APPLICATION**
published in accordance with Art. 153(4) EPC

(43) Date of publication:
29.07.2026 Bulletin 2026/31

(21) Application number: 23952529.8

(22) Date of filing: 19.09.2023

(51) International Patent Classification (IPC):
*G06V 20/56* (2022.01)    *G06T 7/13* (2017.01)
*G06F 18/00* (2023.01)

(52) Cooperative Patent Classification (CPC):
**G06T 7/13; G06V 20/588;** G06T 2207/10024;
G06T 2207/30256

(86) International application number:
**PCT/CN2023/119740**

(87) International publication number:
**WO 2025/059864 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **KUKA Robotics Guangdong Co., Ltd.**
**Foshan, Guangdong 528300 (CN)**
• **GD Midea Air-Conditioning Equipment Co., Ltd.**
**Foshan, Guangdong 528311 (CN)**
• **Midea Group Co., Ltd.**
**Foshan, Guangdong 528311 (CN)**

(72) Inventors:
• **WANG, Xiuzhong**
**Foshan, Guangdong 528300 (CN)**
• **HUANG, Ke**
**Foshan, Guangdong 528300 (CN)**
• **XI, Wei**
**Foshan, Guangdong 528300 (CN)**
• **LUO, Jianbin**
**Foshan, Guangdong 528300 (CN)**

(74) Representative: **Studio Torta S.p.A.**
**Via Viotti, 9**
**10121 Torino (IT)**

(54) **VEHICLE LANE LINE DETECTION METHOD AND APPARATUS, AUTONOMOUS MOBILE APPARATUS, AND STORAGE MEDIUM**

(57)    Provided in the embodiments of the present application are a vehicle lane line detection method and apparatus, an autonomous mobile apparatus, and a storage medium, relating to the technical field of autonomous mobile apparatuses. The method comprises: obtaining an original image captured by a camera of an autonomous mobile apparatus, and according to the original image, computing a gradient image based on the a channel and b channel; extracting line segments located on an edge of a vehicle line from the gradient image based on the a channel and b channel to obtain a plurality of original line segments; using an iterative method, concatenating the collinear line segments among the plurality of original line segments to obtain a plurality of cascaded line segments; generating a plurality of candidate vehicle lane lines from the plurality of cascaded line segments; and merging the plurality of collinear candidate vehicle lane lines to obtain a vehicle lane line in the original image. Thus, a more accurate original line segment can be extracted with respect to a challenging image having a large amount of reflected light and low contrast, and the accuracy, robustness, and practicality of the vehicle lane line detection are improved.

EP 4 783 123 A1

Acquire an original image captured by a camera of an autonomous mobile apparatus, and calculate a gradient image based on a and b channels according to the original image — S110

Extract line segments located at one or more lane-line edges from the gradient image based on the a and b channels to obtain a plurality of original line segments — S120

Concatenate collinear line segments among the plurality of original line segments using an iterative method to obtain a plurality of concatenated line segments — S130

Generate a plurality of candidate lane lines from the plurality of concatenated line segments — S140

Merge the plurality of collinear candidate lane lines to obtain at least one lane line in the original image — S150

**FIG. 3**

## Description

### TECHNICAL FIELD

The present application relates to the technical field of autonomous mobile apparatuses, and in particular to, a lane line detection method and apparatus, an autonomous mobile apparatus, and a storage medium.

### BACKGROUND

Lane line detection is the core of the lane line keeping technology. The vehicle body pose of an autonomous mobile apparatus may be fed back in real time by detecting a lane line, such that the autonomous mobile apparatus may timely adjust the moving direction and speed according to the real time pose, such that it is ensured that the vehicle body is kept inside a lane (the area between two lane lines is the lane) in a stable driving state, or when switching the lane, the autonomous mobile apparatus is assisted to transition to another lane safely and stably from a starting lane.

Current lane line detection technologies include a computer vision method. The computer vision method typically includes the following steps: performing low-level feature extraction on an image captured by a camera of an autonomous mobile apparatus; performing classification and discrimination on the extracted features; performing curve fitting on the features that meet classification and discrimination, to obtain candidate lane lines; and grouping the candidate lane lines, and eliminating false lane lines from the candidate lane lines by using a vanishing point to obtain a final lane line. Such computer vision method has a high requirement on the quality of the image acquired by the camera, which is typically applicable to images with a wide field of view and low reflection. In a case where the mounting height of the camera is less, the proportion of the lane lines in the image decreases at a rate inversely proportional to the square of the distance, and meanwhile, the images of the lane lines are subject to substantial reflected light, which results in the fragmentation of the lane line, thereby leading to low robustness and low accuracy of lane line detection. In addition, images with a wide field of view and low reflection require a great mounting height of the camera, which has a high requirement on the height of the autonomous mobile apparatus body. Therefore, this method is not applicable to the autonomous mobile apparatus with low height of the autonomous mobile apparatus body, with poor practicality.

That is, this method is only applicable to images with a wide field of view and low reflection. In the case where the mounting height of the camera is less, there is a problem of low robustness, low accuracy, and poor practicality of lane line detection.

### SUMMARY

Embodiments of the present application provide a lane line detection method and apparatus, an autonomous mobile apparatus, and a storage medium, to solve the aforementioned problems.

In a first aspect, an embodiment of the present application provides a lane line detection method, including: acquiring an original image captured by a camera of an autonomous mobile apparatus, and calculating a gradient image based on a and b channels according to the original image; extracting line segments located at one or more lane-line edges from the gradient image based on the a and b channels to obtain a plurality of original line segments; concatenating collinear line segments among the plurality of original line segments using an iterative method to obtain a plurality of concatenated line segments; generating a plurality of candidate lane lines from the plurality of concatenated line segments; and merging the plurality of collinear candidate lane lines to obtain at least one lane line in the original image.

In a second aspect, an embodiment of the present application provides a lane line detection apparatus, including: an image acquisition module configured to acquire an original image captured by a camera of an autonomous mobile apparatus, and calculate a gradient image based on a and b channels according to the original image; a line segment extraction module configured to extract line segments located at one or more lane-line edges from the gradient image based on the a and b channels to obtain a plurality of original line segments; an iterative concatenating module, configured to concatenate collinear line segments among the plurality of original line segments using an iterative method to obtain a plurality of concatenated line segments; a lane line generation module, configured to generate a plurality of candidate lane lines from the plurality of concatenated line segments; and a lane line merging module, configured to merge the plurality of collinear candidate lane lines to obtain at least one lane line in the original image.

In a third aspect, an embodiment of the present application provides an autonomous mobile apparatus, including: a memory and a processor, the memory storing an application, and the application being configured to, when invoked by the processor, perform the method provided by the embodiment of the present application.

In a fourth aspect, an embodiment of the present application provides a computer-readable storage medium, where a program code is stored in the computer-readable storage medium, and the program code is configured to, when invoked by a processor, perform the method provided by the embodiment of the present application.

According to the lane line detection method and apparatus, the autonomous mobile apparatus, and the storage medium provided by the embodiments of the present application, by calculating the gradient image based on a and b channels according to the original image, extracting the original line segments at the one or more lane-line edges from the gradient image based on a and b channels, and detecting the lane line in the original image according to the original line segments, illumination-invariant edge detection on the image may be achieved. For the challenging image with substantial reflected light and low contrast, the lane line detection method may extract relatively precise original line segments, so as to improve the accuracy and robustness of lane line detection. In addition, the lane line detection method with a low requirement on the quality of the image may achieve accurate and reliable lane line detection by means of the camera with the low mounting height, which may reduce the height requirement for the autonomous mobile apparatus body, and thus, has wide practicality.

## BRIEF DESCRIPTION OF DRAWINGS

To illustrate the technical solutions in the embodiments of the present application more clearly, the accompanying drawings used in the description of the embodiments will be briefly introduced below. Obviously, the accompanying drawings in the following description are merely some rather than all of the embodiments of the present application. Based on the embodiments of the present application, all other embodiments and accompanying drawings obtained by those of ordinary skill in the art without making creative effort shall fall within the scope of protection of the present application.

FIG. 1 shows a structural block diagram of an autonomous mobile apparatus provided by an embodiment of the present application.
FIG. 2 shows a flowchart of a lane line detection method provided by an embodiment of the present application.
FIG. 3 shows a flowchart of a lane line detection method provided by another embodiment of the present application.
FIG. 4 shows a grayscale image of an original image provided by an exemplary embodiment of the present application.
FIG. 5 shows an image corresponding to an original image corresponding to the grayscale image in FIG. 4 on an L channel.
FIG. 6 shows an image corresponding to an original image corresponding to the grayscale image in FIG. 4 on an a-color channel.
FIG. 7 shows an image corresponding to an original image corresponding to the grayscale image in FIG. 4 on a b-color channel.
FIG. 8 shows a schematic diagram of a lane line provided in an exemplary embodiment of the present application.
FIG. 9 shows a schematic diagram of a result of an original image corresponding to the grayscale image in FIG. 4 with an addition of original line segment extraction provided in an exemplary embodiment of the present application.
FIG. 10 shows a schematic diagram of a histogram provided by an exemplary embodiment of the present application.
FIG. 11 shows a flowchart of a step S130 in FIG. 3 in the present application.
FIG. 12 shows a flowchart of a step S140 in FIG. 3 in the present application.
FIG. 13 shows a schematic diagram of a color verification process provided by an exemplary embodiment of the present application.
FIG. 14 shows a schematic diagram of a color verification process provided by another exemplary embodiment of the present application.
FIG. 15 shows a flowchart of a step S150 in FIG. 3 in the present application.
FIG. 16 shows a flowchart of a lane line detection method provided by yet another embodiment of the present application.
FIG. 17 shows a schematic diagram of a lane keeping process provided by an exemplary embodiment of the present application.
FIG. 18 shows a schematic diagram of a lane keeping process provided by another exemplary embodiment of the present application.
FIG. 19 shows a schematic diagram of a lane keeping process provided by yet another exemplary embodiment of the present application.
FIG. 20 shows a schematic diagram of a lane keeping process provided by yet another exemplary embodiment of the present application.
FIG. 21 shows a structural block diagram of a lane line detection apparatus provided by an embodiment of the present application.
FIG. 22 shows a structural block diagram of an autonomous mobile apparatus provided by another embodiment of the present application.

## DETAIL DESCRIPTION OF THE EMBODIMENTS

To enable those skilled in the art to better understand the solutions of the present application, the technical solutions in the embodiments of the present application will be described clearly and completely below in conjunction with the accompanying drawings in the embodiments of the present application.

The lane line detection method provided by the embodiment of the present application may be applied to the autonomous mobile apparatus or the lane line detection apparatus provided by the embodiments of the present application. Next, the autonomous mobile apparatus provided by an embodiment of the present application will be introduced.

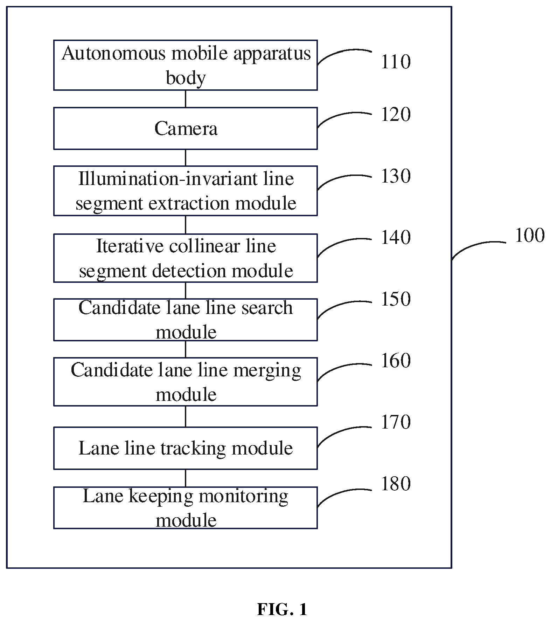

Referring to FIG. 1, FIG. 1 shows a structural block diagram of an autonomous mobile apparatus provided by an embodiment of the present application. The autonomous mobile apparatus 100 may include, but is not limited to, an autonomous mobile robot (AMR) or an automated guided vehicle (AGV). The autonomous mobile apparatus 100 includes an autonomous mobile apparatus body 110, a camera 120, an illumination-invariant line segment extraction module 130, an iterative collinear line segment detection module 140, a candidate lane line search module 150, a candidate lane line merging module 160, a lane line tracking module 170, and a lane keeping monitoring module 180.

The camera 120 is mounted on the autonomous mobile apparatus body 110, the camera 120 may be a camera with a less mounting height and a small field of view, the images acquired by the camera 120 typically have substantial reflected light and a low contrast, and by adopting the camera with the less mounting height, accurate and reliable lane line detection may be achieved according to the lane line detection method provided by the embodiment of the present application, such that the height requirement for the autonomous mobile apparatus body may be reduced, and the lane line detection method provided by the embodiment of the present application has high practicality. Exemplarily, when the autonomous mobile apparatus 100 is located on the ground, a distance between the camera 120 and the ground is less than a specified height, and an orientation of the camera 120 forms an included angle smaller than a specified angle with the ground. The specified height and the specified angle may be set according to the actual height of the autonomous mobile apparatus body 110.

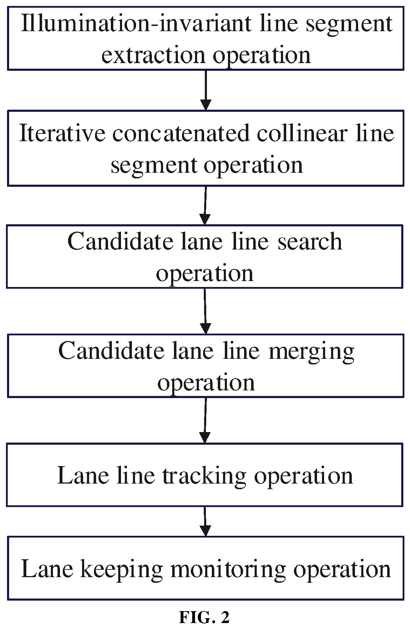

Referring to FIG. 2, the autonomous mobile apparatus 100 may sequentially perform an illumination-invariant line segment extraction operation, an iterative concatenated collinear line segment operation, a candidate lane line search operation, a candidate lane line merging operation, a lane line tracking operation, and a lane keeping monitoring operation. Exemplarily, for each frame of the image acquired by the camera 120 in the moving process of the autonomous mobile apparatus 100, the illumination-invariant line segment extraction module 130 may be configured to perform the illumination-invariant line segment extraction operation, and specifically configured to extract the line segments of the current frame image by adopting the illumination-invariant line segment extraction method to obtain a large number of original line segments corresponding to the image, where the illumination-invariant line segment extraction method refers to a line segment extraction method that extracts the line segments located at the one or more lane-line edges in the gradient image by adopting an edge detection algorithm in the gradient image calculated in the a-color channel and the b-color channel corresponding to the original image without relying on the light of the image. The iterative collinear line segment detection module 140 is configured to perform an iterative concatenated collinear line segment operation, specifically configured to perform iterative concatenating on the collinear line segments in the large number of original line segments to obtain a plurality of concatenated line segments. The candidate lane line search module 150 is configured to perform a candidate lane line search operation, and specifically configured to generate a plurality of candidate lane lines in the plurality of concatenated line segments. The candidate lane line merging module 160 is configured to perform a collinear candidate lane line merging operation, and specifically configured to merge the plurality of collinear candidate lane lines to obtain the lane line corresponding to the current frame image. The lane line tracking module 170 is configured to perform a lane line tracking operation, and specifically configured to acquire lane lines corresponding to the consecutive multi-frame gradient images obtained according to the aforementioned operations and determine the reference lane line according to the lane lines corresponding to the consecutive multi-frame gradient images. The lane keeping monitoring module 180 is configured to perform a lane keeping monitoring operation, and specifically configured to calculate a pose of the autonomous mobile apparatus 100 relative to the reference lane line and send out alarm information for prompting that the autonomous mobile apparatus 100 deviates from a lane when the pose satisfies an alarm condition. Working processes not described in detail in the aforementioned modules 130-180 refer to related parts in the method embodiment below.

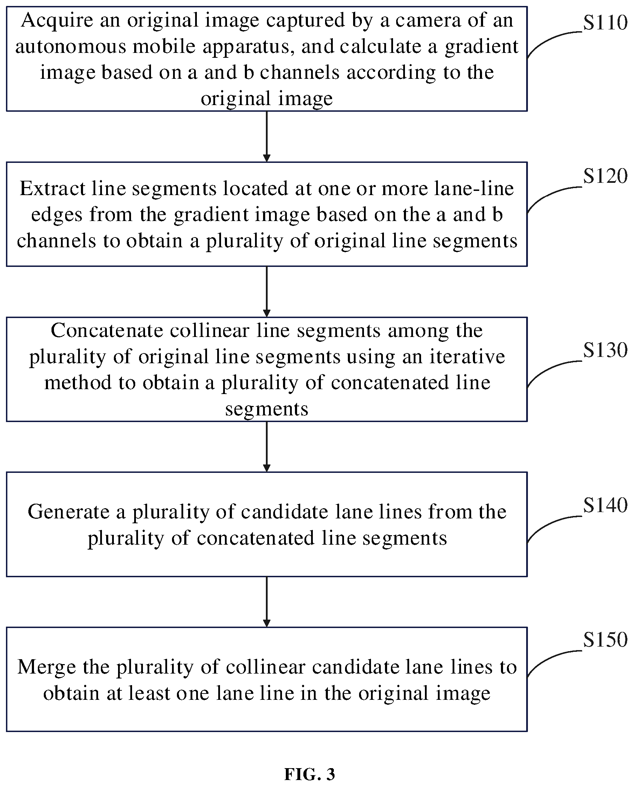

Referring to FIG. 3, FIG. 3 shows a flowchart of a lane line detection method provided by an embodiment of the present application. The lane line detection method may include the following step S110 to step S150.

Step S110, an original image captured by a camera of an autonomous mobile apparatus is acquired, and a gradient image based on a and b channels is calculated according to the original image.

The original image acquired by the camera is a true-color image (RGB image), and the color of the RGB image is a color formed by combining three primary colors: red, green, and blue. In some embodiments, the camera is mounted at a relatively low angle with a small field of view, and the original image captured by the camera contains substantial reflected light and has a low contrast. To address the conditions of significant variations in illumination and strong reflections to prevent light from affecting the accuracy of subsequent original line segment extraction, it is necessary to achieve illumination-invariant edge detection. In the embodiment of the present application, the original image is converted into the Lab image, and the line segments at the one or more lane-line edges are then extracted based on the gradient image corresponding to the a-color channel and the b-color channel in the Lab image, such that the accuracy and robustness of original line segment extraction are improved because the color difference of the lane line is the most prominent feature. The Lab image is composed of a light (abbreviated as L) channel, the a-color channel, and the b-color channel. During operation on the image, the L channel, the a-color channel, and the b-color channel of the Lab image may be operated independently without interference of the channels, such that the robustness of original line segment extraction may be improved. Moreover, without considering the L channel, the influence of an illumination intensity variation on the image may be avoided, such that the accuracy of original line segment extraction may be improved.

Exemplarily, the original image may be converted from an RGB color space into an XYZ color space by adopting an algorithm in an open source computer vision library (abbreviated as OpenCV) for converting the RGB color space into the XYZ color space; and the XYZ color space is converted into the Lab color space by adopting an algorithm in the OpenCV for converting the XYZ color space into the Lab color space to obtain the Lab image.

Upon obtaining the Lab image, the gradient image based on a and b channels may be constructed by adopting a graphics processing unit (abbreviated as GPU) acceleration method of a DiZenzo operator according to the a-color channel and the b-color channel of the Lab image. The GPU acceleration method of the DiZenzo operator refers to a method of calculating the gradient images of the a-color channel and the b-color channel by achieving GPU acceleration with a compute unified device architecture (abbreviated as CUDA) in a CUDA module with the existing DiZenzo operator added into the OpenCV. The DiZenzo operator in the current OpenCV is typically implemented by adopting a central processing unit (CPU). Due to the large computation load of gradient image construction and a relatively low processing efficiency of the CPU, compared with an existing CPU method adopting the DiZenzo operator, the embodiment of the present application adopting the GPU acceleration of the DiZenzo operator may significantly improve the speed of constructing the gradient image, thereby improving the efficiency of overall lane line detection.

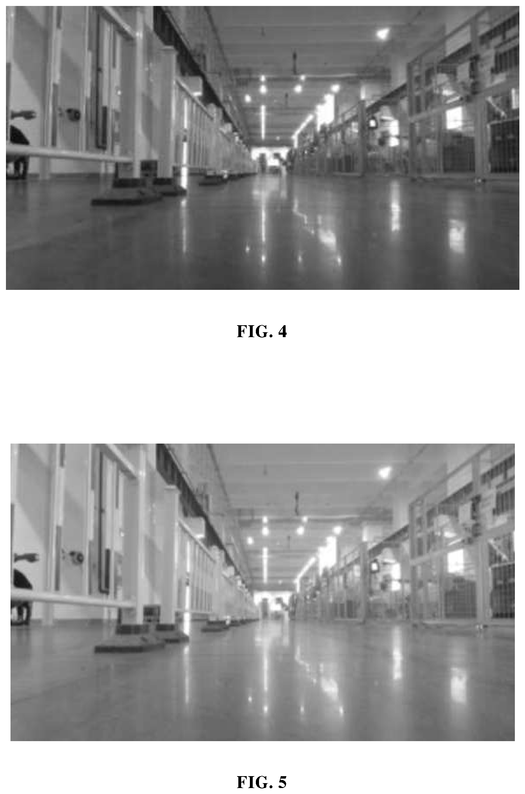

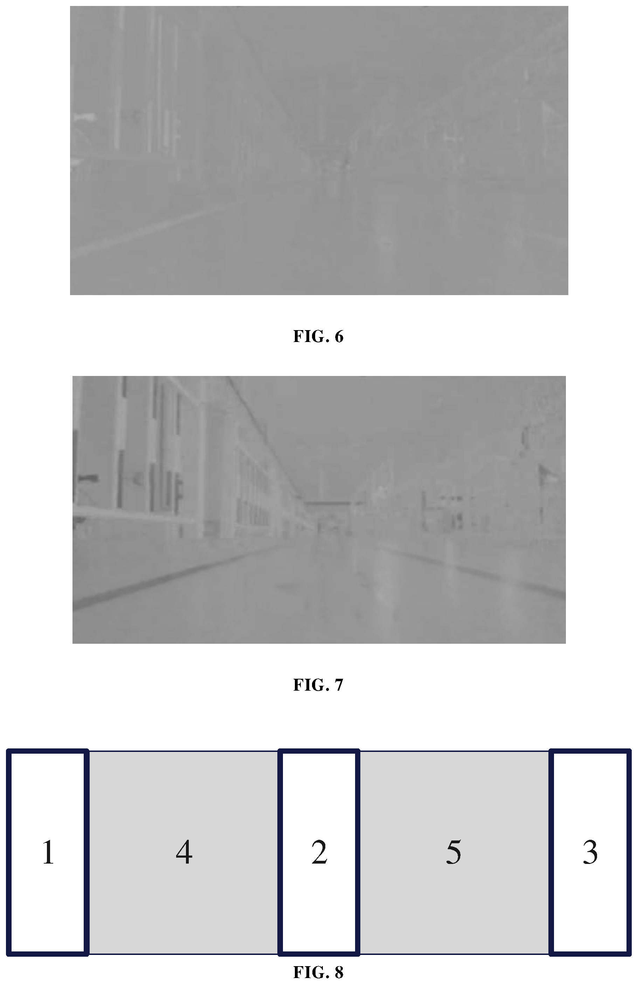

Exemplarily, referring to FIGS. 4-7, FIG. 4 is a grayscale image of the original image. The original image corresponding to the grayscale image in FIG. 4 is converted from the RGB color space into the Lab color space to obtain the Lab image. The image of the L channel in the Lab image is shown in FIG. 5. The image of the a-color channel in the Lab image is shown in FIG. 6. The image of the b-color channel in the Lab image is shown in FIG. 7.

Step S120, line segments located at one or more lane-line edges are extracted from the gradient image based on a and b channels to obtain a plurality of original line segments.

Referring to FIG. 8, FIG. 8 shows three lane lines 1-3. An area between the lane line 1 and the lane line 2 forms a lane 4, an area between the lane line 2 and the lane line 3 forms a lane 5, and bold black parts in the lane lines 1-3 are respectively edges of the lane lines 1-3.

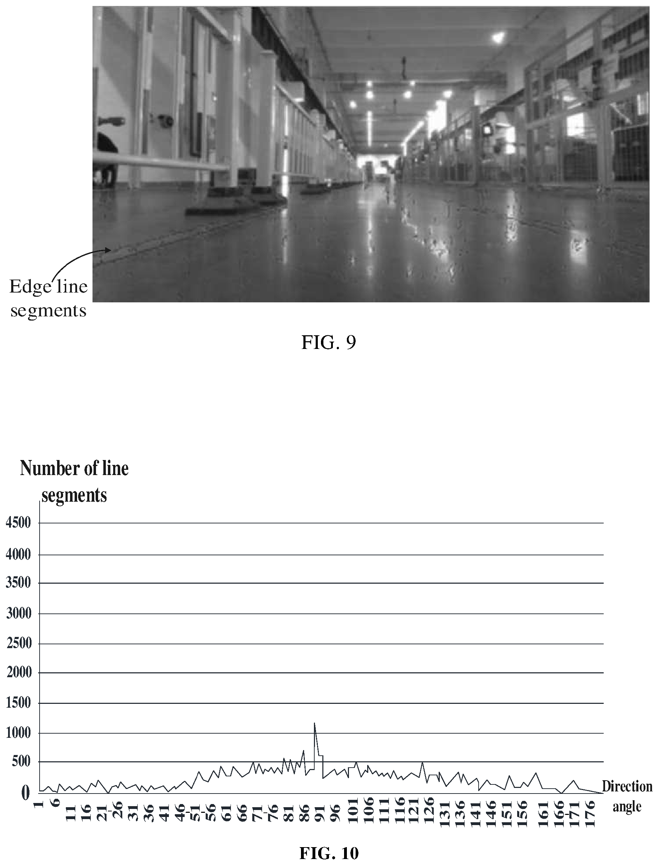

A related lane line edge extraction operator may be adopted to extract the line segments at the one or more lane-line edges from the gradient image based on a and b channels to obtain the plurality of original line segments. The lane line edge extraction operator may include, but is not limited to, a Marr-Hildreth operator, a Canny operator, and a Laplacian operator, and the like, which is not specifically limited herein. To facilitate understanding, exemplarily, referring to FIG. 4 and FIG. 9, for the original image corresponding to the grayscale image shown in FIG. 4, operations of step S110 and step S120 are performed to obtain the plurality of original line segments. The plurality of original line segments are added into the original image to obtain the original image corresponding to the grayscale image shown in FIG. 9, where the line segments indicated by arrows are the original line segments.

Step S130, collinear line segments among the plurality of original line segments are concatenated using an iterative method to obtain a plurality of concatenated line segments.

For the lane lines in the original image acquired by the camera, the farther the lane lines are from the autonomous mobile apparatus, the smaller the widths thereof are; the closer the lane lines are to the autonomous mobile apparatus, the greater the widths thereof are. To ensure that the lane lines at different distances are consistent in width, in the embodiment of the present application, the plurality of original line segments are transformed into the ground coordinate system to obtain the plurality of original line segments in the ground coordinate system, and included angles between the plurality of original line segments and a horizontal axis of the ground coordinate system may be respectively calculated as respective direction angles of the plurality of original line segments.

The preferred direction of at least one lane line may be determined according to the direction angles of the plurality of original line segments. Exemplarily, all the original line segments may be scanned. The histogram shown in FIG. 10 is constructed according to the respective direction angles of the plurality of original line segments. The horizontal axis of the histogram represents the direction angles of the original line segments, and the vertical axis thereof represents the number of the original line segments. Referring to FIG. 9, after the original line segment extraction operation, the plurality of original line segments actually further include noise short line segments, such as noise short line segments in the at least one lane line indicated by dashed lines in FIG. 9. The direction angles of the original line segments on a typical lane line are consistent with the direction angle of an actual lane line (the included angle between the actual lane line direction and the horizontal axis of the ground coordinate system) and there are a large number of original line segments. The direction angles of the noise short line segments are messy and scarce. Therefore, the direction (typically the length direction of the original line segments) of the original line segments corresponding to a peak value in the histogram may be used as the preferred direction of the lane line.

After the preferred direction of the at least one lane line is determined, at least one original line segment with the preferred direction of the at least one lane line or at least one original line segment with a length greater than a length threshold may be selected from the plurality of original line segments as at least one preferred line segment, and a preferred marker (such as, a bprefered marker) of each of the at least one preferred line segment is set to true. The length threshold is configured to filter out the aforementioned noise short line segments, and may be determined according to an actual operating scene of the autonomous mobile apparatus.

The plurality of original line segments may be sorted according to the direction angles of the plurality of original line segments to obtain a sequence of the original line segments. Exemplarily, the original line segments may be sorted either in ascending order of the direction angles or in descending order of the direction angles.

The collinear line segments among the plurality of original line segments may be concatenated using the iterative method to obtain the plurality of concatenated line segments, where each iteration involves concatenating two line segments, the two line segments include a first line segment and a second line segment, and a bprefered marker of the first line segment has to be true and the first line segment is not merged. The first line segment involved in the first iteration is the first preferred line segment in the sequence of the original line segments. A direction angle difference between the second line segment and the first line segment is less than a preset angle, a lateral distance is less than a preset lateral distance error, a longitudinal distance between the second line segment and the first line segment in a line segment direction is less than a preset spacing, and the preset angle, the preset lateral distance error, and the preset spacing all may be determined according to the actual requirement for accuracy and the actual operating scenario, which are not specifically limited herein. In the embodiment of the present application, sorting aims to quickly find the first line segment and the second line segment in each iteration during iteration, so as to improve the iteration efficiency. The bprefered marker is configured to quickly search for the first line segment involved in each iteration, which may significantly improve the iteration efficiency. It should be noted that the lateral distance in the embodiment of the present application refers to a distance in a normal direction of the line segment.

Specifically, during the first iteration, the first preferred line segment is acquired from the sequence of the original line segments as the first line segment involved in the first iteration, and the bprefered marker of the first line segment has to be true and the first line segment is not merged. The second line segment satisfying concatenating conditions of the original line segments is searched. Exemplarily, a next line segment of the first line segment may be acquired as the second line segment, and whether the direction angle difference between the second line segment and the first line segment is less than the preset angle is determined; if the direction angle difference between the second line segment and the first line segment is less than the preset angle, whether the lateral distance between the second line segment and the first line segment is less than the preset lateral distance error is detected; if the lateral distance between the second line segment and the first line segment is less than the preset lateral distance error, whether the longitudinal distance in the line segment direction of the second line segment and the first line segment is less than the preset spacing is detected, and if the longitudinal distance in the line segment direction of the second line segment and the first line segment is less than the preset spacing, it is determined that the second line segment satisfying the concatenating conditions of the original line segments is found. In a case where any determination result regarding the direction angle difference between the second line segment and the first line segment, the lateral distance, and the longitudinal distance in the line segment direction is "negative", it is determined that the second line segment is not found.

If the second line segment is found, the first line segment and the second line segment are merged according to the number of the original line segments respectively included in each of the first line segment and the second line segment to obtain a concatenated line segment obtained in this iteration. Exemplarily, if the number of the original line segments included in the first line segment is greater than or equal to the number of the original line segments included in the second line segment, the second line segment is merged into the first line segment to obtain the concatenated line segments obtained in this iteration; and if the number of the original line segments included in the first line segment is less than the number of the original line segments included in the second line segment, the first line segment is merged into the second line segment to obtain the concatenated line segments obtained in this iteration. By setting a merging sequence of the first line segment and the second line segment, the line segment merging efficiency may be improved. The bprefered marker of the concatenated line segment obtained in this iteration is set to true, the concatenated line segment obtained in this iteration is used as the first line segment for the next iteration to enter the next iteration, and the step of searching for the second line segment satisfied concatenating conditions of the original line segments is repeatedly performed until an iteration termination condition is satisfied, to obtain the plurality of concatenated line segments. The iteration termination condition is as follows: no new concatenated line segments are generated in an iterative loop.

If the second line segment is not found, the bprefered marker of the first line segment is set to false to enter the next iteration, and the first line segment involved in the next iteration is determined again from the preferred line segment continuously according to the sequence of the original line segments until the iteration termination condition is satisfied, to obtain the plurality of concatenated line segments. The sorting operation may achieve backtracking traversal (look back).

The backtracking traversal means that since the first line segment during the iterative concatenating may not exist in front of the second line segment in the sequence, the operation may return to the first line segment in the sequence to continuously search for the second line segment after the first line segment in the sequence is traversed until the iteration termination condition is satisfied.

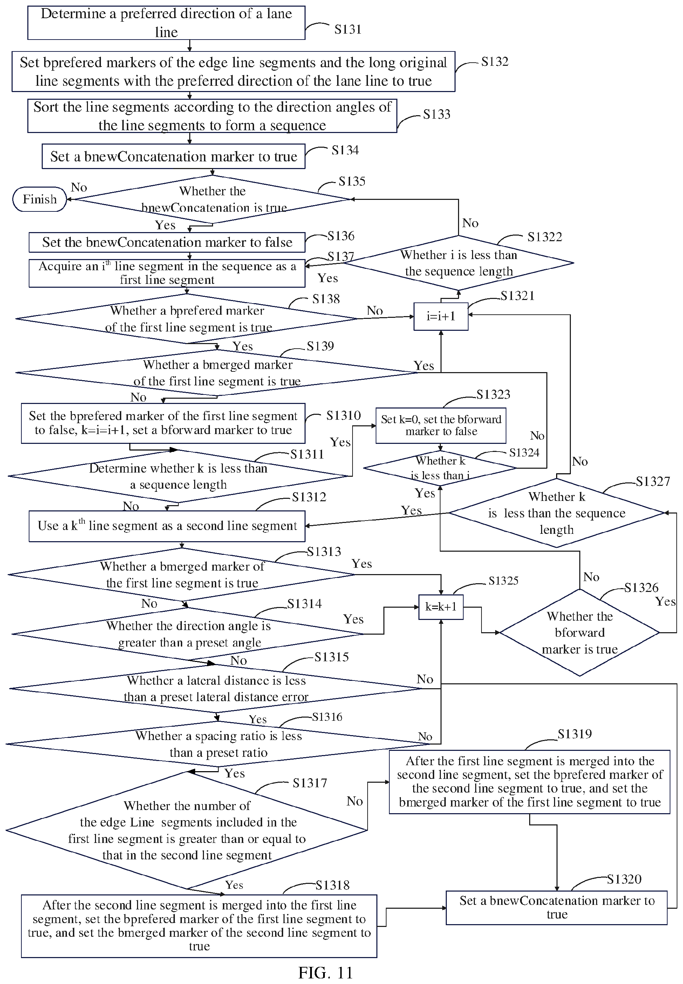

To facilitate understanding, provided herein is an example shown in FIG. 11 to describe the iterative concatenating logic of step S130. Step S130 may include step S131 to step S1327 shown in FIG. 11.

Step S131, the preferred direction of the lane line is determined.

Step S132, the bprefered markers of the original line segments and the long original line segments (the length of the line segments is greater than the length threshold) with the preferred direction of the lane line are set to true.

Step S133, the line segments are sorted according to the direction angles of the line segments to form a sequence.

Step S134, a marker of a new concatenated line segment (bnewConcatenation marker) is set to true, and an initialized bnewConcatenation marker characterizes generation of the new concatenated line segment for starting a first iteration.

Step S135, whether the bnewConcatenation marker is true is determined.

If the bnewConcatenation marker is true, it characterizes generation of the new concatenated line segment for entering Step S136. If the bnewConcatenation marker is false, it characterizes no generation of the new concatenated line segment, such that the iteration operation is finished.

Step S136, the bnewConcatenation marker is set to false, and it is set that i=0.

i is the number in the sequence, the sequence is numbered from 0, and when i=0, the $0^{th}$ line segment actually refers to the first line segment in the sequence. i is zero or an integer greater than zero. The total number (which may also be understood as the length of the sequence) of the line segments included in the sequence is the maximum value of i plus 1.

i in the embodiment of the present application, k mentioned below, and j mentioned below are all zero or integers greater than zero, and i, k, and j are respectively configured to acquire the $(i+1)^{th}$, $(k+1)^{th}$, and $(j+1)^{th}$ original line segments (or the concatenated line segments or candidate lane lines) in the sequence of the original line segments (or the sequence of the concatenated line segments or the sequence of the candidate line segments). For example, when i is 0, the first line segment in the sequence is acquired, and the same principle applies to j and k as to i.

Step S137, the $i^{th}$ line segment in the sequence is acquired as the first line segment.

Step S138, whether the preferred marker (bprefered marker) of the first line segment is true is determined.

If the bprefered marker of the first line segment is true, it enters step S139. If the bprefered marker of the first line segment is false, it enters step S1321.

Step S139, whether the merged marker (bmerged marker) of the first line segment is true is determined.

The bmerged marker is configured to indicate whether the first line segment is merged, and if the bmerged marker is true, it indicates that the first line segment has been merged, and if the bmerged marker is false, it indicates that the first line segment has not been merged. If the bmerged marker of the first line segment is true, it enters step S1321. If the bmerged marker of the first line segment is false, it enters step S1310.

Step S1310, the bprefered marker of the first line segment is set to false, it is set that k=i+1, and the forward marker (bforward marker) is set to true.

The bforward marker is configured to characterize backward traversal of one line segment along the order of the sequence. k is the number in the sequence, the sequence is numbered from 0, and when k=0, the $0^{th}$ line segment actually refers to the first line segment in the sequence. k is zero or an integer greater than zero. The total number (which may also be understood as the length of the sequence) of the line segments included in the sequence is the maximum value of i plus 1.

Step S1311, whether k is less than the sequence length is determined.

If k is less than the sequence length, it enters step S1323. If k is not greater than the sequence length, it enters step S1312.

Step S1312, the $k^{th}$ line segment is used as the second line segment.

Step S1313, whether the bmerged marker of the first line segment is true is determined.

If the bmerged marker of the first line segment is false, it enters step S1314. If the bmerged marker of the first line segment is true, it enters step S1325.

Step S1314, the direction angle difference between the first line segment and the second line segment is calculated, and whether the direction angle difference is greater than the preset angle is determined.

If the direction angle difference is greater than the preset angle, it enters step S1325. If the direction angle difference is not greater than the preset angle, it enters step S1315.

Step S1315, the lateral (normal) distance between the first line segment and the second line segment is calculated, and whether the lateral distance between the first line segment and the second line segment is less than the preset lateral distance error is determined.

If the lateral distance between the first line segment and the second line segment is less than the preset lateral distance error, it enters step S1316. If the lateral distance between the first line segment and the second line segment is not less than the preset lateral distance error, it enters step S1326.

Step S1316, the spacing distance (the distance in the line segment direction) between the first line segment and the second line segment in the sequence is calculated, the ratio of the spacing distance to the total length of the two line segments is calculated to obtain a spacing ratio, and whether the spacing ratio is less than the preset ratio (the preset ratio may be determined according to the actual operating scenario of the autonomous mobile apparatus) is determined.

If the spacing ratio is less than the preset ratio, it enters step S1317. If the spacing ratio is not less than the preset ratio, it enters step S1325.

Step S1317, whether the number of the original line segments included by the first line segment (which may also be understood as the number of the merged original line segments included by the first line segment) is greater than the number of the original line segments included by the second line segment (which may also be understood as the number of the merged original line segments included by the second line segment) is determined.

If the number of the original line segments included by the first line segment is greater than or equal to the number of the original line segments included by the second line segment, it enters step S1318. if the number of the original line segments included by the first line segment is not greater than the number of the original line segments included by the second line segment, it enters step S1319.

Step S1318, after the second line segment is merged into the first line segment, the bprefered marker of the first line segment is set to true, and the bmerged marker of the second line segment is set to true.

Step S1319, after the first line segment is merged into the second line segment, the bprefered marker of the second line segment is set to true, and the bmerged marker of the first line segment is set to true.

Step S1320, the bnewConcatenation marker is set to true. After step S1320 is performed, it enters step S1325. Step S1321, i=i+1.

Step S1322, whether i is less than the sequence length is determined.

If i is less than the sequence length, it returns to step S137. If i is not less than the sequence length, it returns to step S135.

Step S1323, it is set that k=0, and the bforward marker is set to false.

Step S 1324, whether k is less than i is determined. If k is less than i, it returns to step S1312. If k is not less than i, it returns to step S1321.

Step S1325, k=k+1.

Step S1326, whether the bforward marker is true is determined.

if the forward marker is true, it enters step S 1327. If the forward marker is false, it returns to step S1324.

Step S1327, whether k is less than the sequence length is determined.

If k is less than the sequence length, it returns to step S1312. If k is not less than the sequence length, it returns to step S1321.

Step S140, a plurality of candidate lane lines are generated from the plurality of concatenated line segments.

A preset lane line width specification and a preset lane line color specification are acquired. The preset lane line width specification refers to a width specification determined from a standard lane line width specification according to the actual operating scenario of the autonomous mobile apparatus, such as 8-10 cm. The preset lane line width specification may include one or more width specifications. The preset lane line color specification refers to a color specification determined from a standard lane line color specification according to the actual operating scenario of the autonomous mobile apparatus. The preset lane line color specification may include one or more color specifications, such as red, yellow, white, and black. The preset lane line width specification and the preset lane line color specification are both prior information set in advance based on the actual operating scenario of the autonomous mobile apparatus, and the candidate lane lines generated based on the prior information are closer to the actual lane lines, which may improve the lane line detection precision.

A plurality of line segment pairs are selected from the plurality of concatenated line segments according to the preset lane line width specification. Exemplarily, included angles between the plurality of concatenated line segments and a horizontal axis of a ground coordinate system may be calculated as respective direction angles of the plurality of concatenated line segments. The plurality of concatenated line segments are sorted according to the direction angles of the plurality of concatenated line segments to obtain a sequence of the concatenated line segments, where sorting may be performed either in ascending order of the direction angles or in descending order of the direction angles, which is not specifically limited herein. A plurality of line segment pairs are selected from the plurality of concatenated line segments according to the sequence of the concatenated line segments, and the direction angle difference between two line segments included in each of the line segment pairs is less than the preset angle and the lateral distance satisfies the preset lane line width specification. The lateral distance satisfies the preset lane line width specification, which means that the lateral distance satisfies one of the preset lane line width specifications.

The way of selecting the plurality of line segment pairs from the concatenated line segments is also an iterative manner. Each iteration involves matching of two concatenated line segments, and successfully matched two concatenated line segments form one line segment pair. Specifically, the two concatenated line segments involved in each iterative process are respectively referred to as a first concatenated line segment and a second concatenated line segment, and the preferred marker of the first concatenated line segment has to be true. If the first concatenated line segment and the second concatenated line segment match successfully, the first concatenated line segment and the second concatenated line segment in this iteration form one line segment pair.

Exemplarily, for each iteration, the first concatenated line segment involved in the current iterative process is determined according to the sequence of the concatenated line segments, and the preferred marker of the first concatenated line segment is true. The second concatenated line segment is searched in the sequence of the concatenated line segments. Whether the first concatenated line segment and the second concatenated line segment satisfy a matching condition is detected. If the first concatenated line segment and the second concatenated line segment satisfy the matching condition (the matched second concatenated line segment is found in the sequence of the concatenated line segments is found), the first concatenated line segment and the second concatenated line segment match successfully and form one line segment pair. If the matched second concatenated line segment is not found in the sequence of the concatenated line segments, the preferred marker of the first concatenated line segment is set to false, and the first concatenated line segment and the second concatenated line segment in the next iteration are determined again in the sequence of the concatenated line segments until all line segments in the concatenated line segments are traversed.

The direction angle difference between the first concatenated line segment and the second concatenated line segment may be calculated, and whether the direction angle difference between the first concatenated line segment and the second concatenated line segment is less than the preset angle is determined. The lateral distance between the first concatenated line segment and the second concatenated line segment may be calculated, and whether the lateral distance between the first concatenated line segment and the second concatenated line segment satisfies the preset lane line width specification is determined. If the direction angle difference between the first concatenated line segment and the second concatenated line segment is less than the preset angle, and the lateral distance between the first concatenated line segment and the second concatenated line segment satisfies the preset lane line width specification (one of the preset lane line width specifications), it is determined that the first concatenated line segment and the second concatenated line segment satisfy the matching condition. If one of determination results about the direction angle difference and the lateral distance between the first concatenated line segment and the second concatenated line segment is "negative", it is determined that the first concatenated line segment and the second concatenated line segment do not satisfy the matching condition.

First color verification is performed on the plurality of line segment pairs according to the preset lane line color specification. For each of the line segment pairs in the plurality of line segment pairs, color intensity distributions of the two original line segments included in the current line segment pair on an a-color channel and a b-color channel are acquired, where if the color intensity distributions of the two original line segments on the a-color channel and the b-color channel both satisfy the preset lane line color specification, it is determined that the current line segment pair passes the first color verification; and if the color intensity distributions of the two original line segments on both the a-color channel and the b-color channel do not satisfy the preset lane line color specification, it is determined that the current line segment pair fails to pass the first color verification. The color intensity distributions satisfy the preset lane line color specification, which means that the color intensity distributions satisfy one color specification in the preset lane line color specification. A plurality of candidate lane lines generated according to the plurality of line segment pairs passing the first color verification, each of the line segment pairs passing the first color verification corresponding to one candidate lane line. For each line segment pair passing the first color verification, a candidate lane line may be constructed according to a region between the current line segments.

Exemplarily, after each iteration generates the new line segment pair, first color verification may be performed on the new line segment pair. Exemplarily, the color intensity distributions of the two original line segments on the a-color channel and the b-color channel in the new line segment pair may be acquired, where if the color intensity distributions of the two original line segments on both the a-color channel and the b-color channel in the new line segment pair satisfy one of the preset lane line color specifications, it is determined that the new line segment pair passes the first color verification, and a candidate lane line is constructed according to a region between the new line segments passing the first color verification.

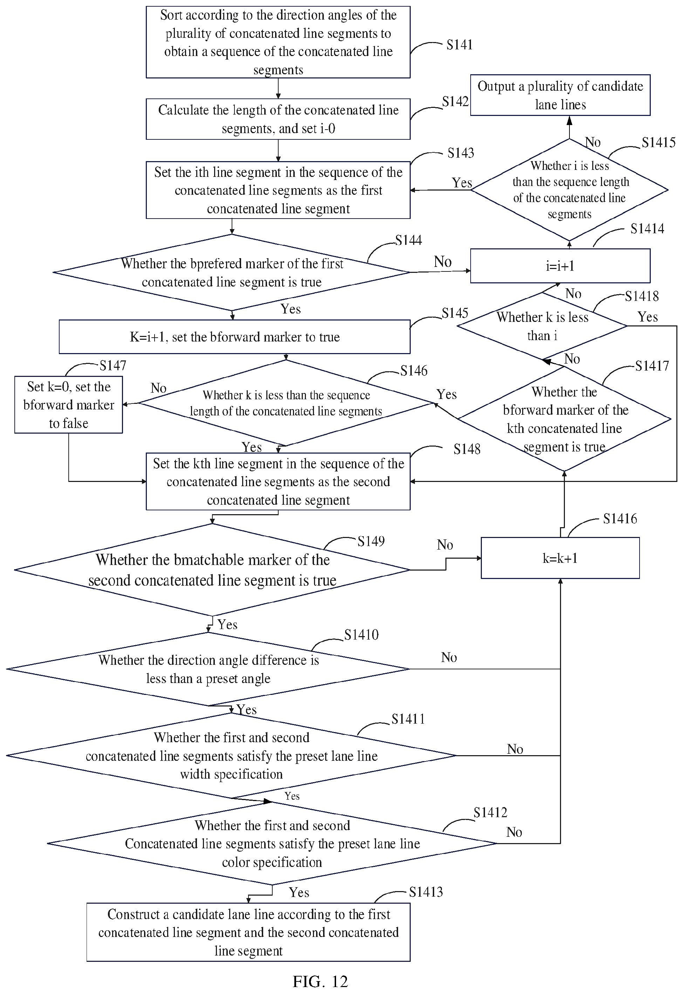

To facilitate understanding, an example shown in FIG. 12 is provided herein to describe a candidate lane line generation logic in step S140. Step S140 may include step S141 to step S1418 shown in FIG. 12.

Step S141, the plurality of concatenated line segments are sorted according to the direction angles of the plurality of concatenated line segments to obtain a sequence of the concatenated line segments.

Step S142, a length of the sequence of the concatenated line segments is calculated, and it is set that i=0.

i is the number in the sequence, the sequence is numbered from 0, and when i=0, the $0^{th}$ line segment actually refers to the first line segment in the sequence. i is zero or an integer greater than zero. The total number (which may also be understood as the length of the sequence) of the line segments included in the sequence is the maximum value of i plus 1.

Step S143, the $i^{th}$ line segment in the sequence of the concatenated line segments is the first concatenated line segment.

Step S144, whether the bprefered marker of the first concatenated line segment is true is determined.

If the bprefered marker of the first concatenated line segment is true, it enters step S145. If the bprefered marker of the first concatenated line segment is false, it enters step S1414.

Step S145, k=i+1, and the bforward marker is set to true.

k is the number in the sequence, the sequence is numbered from 0, and when k=0, the $0^{th}$ line segment actually refers to the first line segment in the sequence. k is zero or an integer greater than zero. The total number (which may also be understood as the length of the sequence) of the line segments included in the sequence is the maximum value of i plus 1.

Step S146, whether k is less than the sequence length of the concatenated line segments is determined.

If k is less than the sequence length of the concatenated line segments, it enters step S148. If k is not less than the sequence length of the concatenated line segments, it enters step S147.

Step S147, it is set that k=0, and the bforward marker is set to false.

Step S148, the $k^{th}$ line segment in the sequence of the concatenated line segments is set as the second concatenated line segment.

Step S149, whether the matchable marker (bmatchable marker) of the second concatenated line segment is true is determined.

The bmatchable marker is configured to characterize whether the second concatenated line segment may be used for matching the first concatenated line segment.

If the bmatchable marker of the second concatenated line segment is true, it is determined that the second concatenated line segment may be used for sequent matching operation with the first concatenated line segment, and it enters step S1410. If the bmatchable marker of the second concatenated line segment is false, it is determined that the second concatenated line segment may not be used for sequent matching operation with the first concatenated line segment, and it enters step S1416.

Step S1410, the direction angle difference between the first concatenated line segment and the second concatenated line segment is calculated, and whether the angle difference is less than the preset angle is determined.

If the direction angle difference between the first concatenated line segment and the second concatenated line segment is less than the preset angle, it enters step S1411. If the direction angle difference between the first concatenated line segment and the second concatenated line segment is not less than the preset angle, it enters step S1416.

Step S1411, whether the first concatenated line segment and the second concatenated line segment satisfy one of the preset lane line width specifications.

If the first concatenated line segment and the second concatenated line segment satisfy one of the preset lane line width specifications, it enters step S1412. If the first concatenated line segment and the second concatenated line segment do not satisfy one of the preset lane line width specifications, it enters step S1416.

Step S1412, first color verification is performed on the first concatenated line segment and the second concatenated line segment, and whether the color intensity distributions of the first concatenated line segment and the second concatenated line segment on the a-color channel and the b-color channel satisfy one of the preset lane line color specifications is determined.

If the color intensity distributions of the first concatenated line segment and the second concatenated line segment on the a-color channel and the b-color channel satisfy one of the preset lane line color specifications, it enters step S1413. If the color intensity distributions of the first concatenated line segment and the second concatenated line segment on the a-color channel and the b-color channel do not satisfy one of the preset lane line color specifications, it enters step S1416.

Step S1413, a candidate lane line is constructed according to a region between the first concatenated line segment and the second concatenated line segment.

Step S1414, i=i+1.

Step S1415, whether i is less than the sequence length of the concatenated line segments is determined.

If i is less than the sequence length of the concatenated line segments, it returns to step S143. If i is not less than the sequence length of the concatenated line segments, a plurality of candidate lane lines are output.

Step S1416, k=k+1.

Step S1417, whether the bforward marker of the $k^{th}$ concatenated line segment is true is determined.

If the bforward marker of the $k^{th}$ concatenated line segment is true, it returns to step S146. If the bforward marker of the $k^{th}$ concatenated line segment is false, it enters step S1418.

Step S1418, whether k is less than i is determined. If k is less than i, it returns to step S148. If k is not less than i, it returns to step S1414.

Step S150, the plurality of collinear candidate lane lines are merged to obtain a lane line in the original image.

The collinear candidate lane lines in the plurality of candidate lane lines are merged to obtain a plurality of long lane lines. The collinear candidate lane lines are concatenated to form the long lane lines, which may avoid interference of a short lane line, thereby improving the accuracy of lane line detection. The short lane line is caused by residual paint from an obsolete lane line, or is a short lane line that has no significance for lane keeping. Exemplarily, included angles between the plurality of candidate lane lines and the horizontal axis of the ground coordinate system may be respectively calculated as respective direction angles of the plurality of candidate lane lines; the plurality of candidate lane lines are sorted according to the respective direction angles of the plurality of candidate lane lines to obtain a sequence of the candidate lane lines; and the collinear candidate lane lines among the plurality of candidate lane lines are sequentially merged according to the sequence of the candidate lane lines to obtain the plurality of long lane lines.

Second color verification is performed on the plurality of long lane lines, the at least one long lane line passing the second color verification being the at least one lane line in the original image. Exemplarily, for each of the plurality of long lane lines, at least one pair of original line segments is found from the current long lane line; for each pair of original line segments, the color intensity distribution of the area between the two original line segments on the a-color channel and the b-color channel are acquired, where if the color intensity distribution satisfies one of the preset lane line color specifications, it is determined that the current long lane line passes the second color verification, and the lane line passing the second color verification is the lane line in the original image.

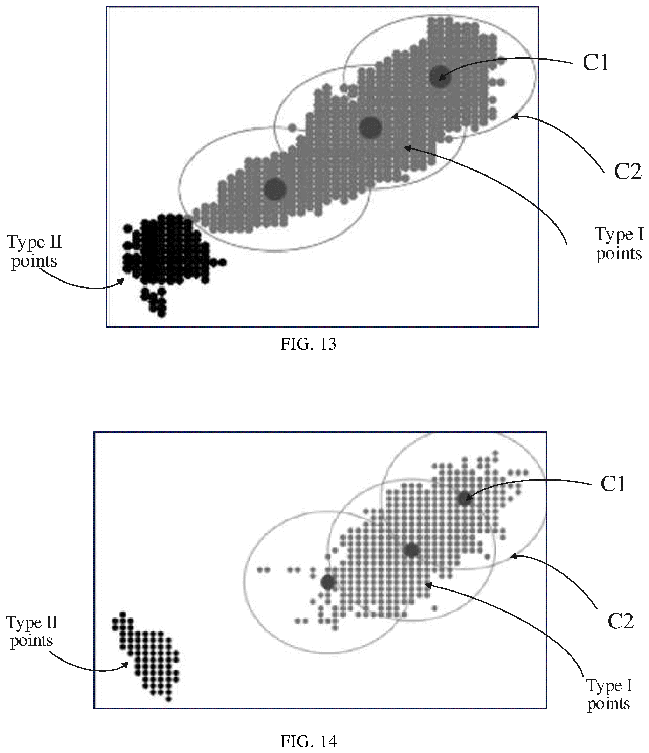

Exemplarily, to visualize the second color verification process, referring to FIG. 13 and FIG. 14, the original image involved in FIG. 13 is acquired by a D435 camera, and the original image involved in FIG. 14 is acquired by a Bosheng camera. A bounding box may be created using an open-source image annotation tool. The bounding box includes pixel points (the type I points shown in FIG. 13 and FIG. 14) of the candidate lane lines in the multi-frame original images. The bounding box further includes background pixel points (type II points shown in FIGS. 13 and 14). For the color of the pixel points of the candidate lane lines, the colors of the pixel points of each of the candidate lane lines are clustered using a K-means clustering algorithm. As shown in FIG. 13 and FIG. 14, a small circle C1 represents a clustering center. A large circle C2 represents a clustering range of each clustering center. C1 and C2 may be determined according to a user requirement. After clustering, the color specification corresponding to each clustering range may be obtained. For each of the candidate lane line, whether the color of each pixel in the current candidate lane line is the same as the color specification corresponding to the clustering range where the current candidate lane line is located may be detected. If the color of each pixel in the current candidate lane line is the same as the color specification corresponding to the clustering range where the current candidate lane line is located, it is determined that the pixel is verified successfully; and if the color of each pixel in the current candidate lane line is not the same as the color specification corresponding to the clustering range where the current candidate lane line is located, it is determined that it is fail to verify the pixel. The number (m) of the pixels that have been detected and the number (n) of the pixels that have been verified successfully are calculated. If the number of the pixels that have been detected is greater than a preset pixel number threshold (N, such as N=10), and a ratio of the number (n) of the pixels that have been verified successfully to the number (m) of the pixels that have been detected is greater than a preset probability, it is determined that the current candidate lane line passes the second color verification. If the condition that the number of the pixels that have been detected is greater than a preset pixel number threshold (N, such as N=10), and a ratio of the number (n) of the pixels that have been verified successfully to the number (m) of the pixels that have been detected is greater than a preset probability is still not satisfied after all the pixel points in the current candidate lane line are traversed, it is determined that the current candidate lane line fails to pass the second color verification.

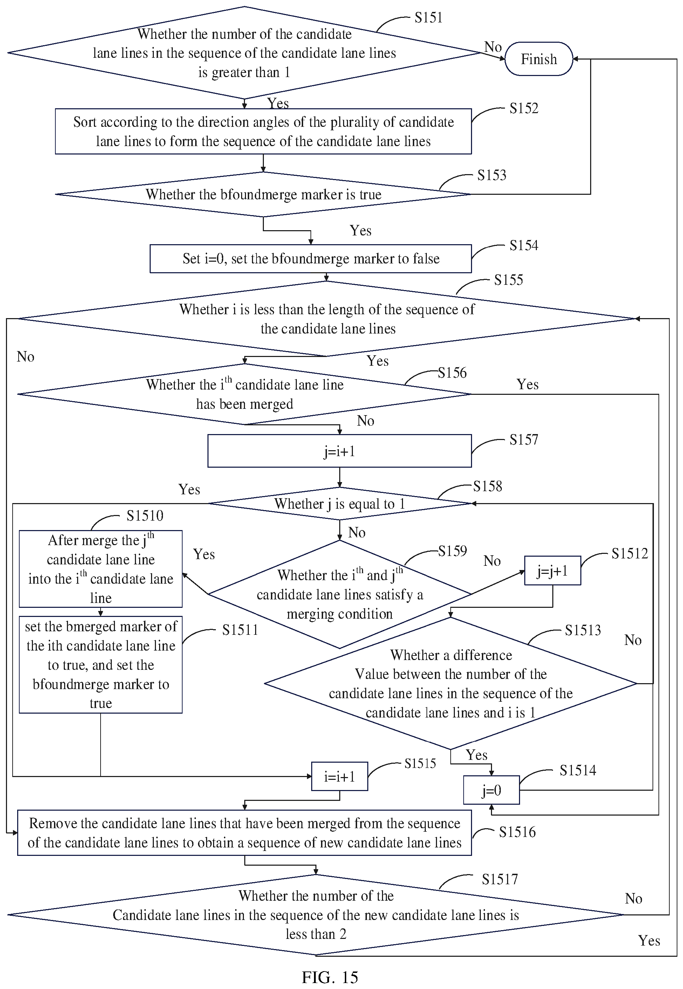

Exemplarily, the collinear candidate lane line merging and second color verification processes may be implemented in an iterative manner. Referring to FIG. 15, step S150 may include step S151 to step S1517.

Step S151, whether the number of the candidate lane lines in the sequence of the candidate lane lines is greater than 1 is determined.

If the number of the plurality of candidate lane lines is greater than 1, it enters step S152. If the number of the plurality of candidate lane lines is not greater than 1, iteration is finished.

Step S152, the direction angles of the plurality of candidate lane lines are sorted to form the sequence of the candidate lane lines.

Step S153, whether a candidate merged marker (bfoundmerge marker) is true is determined.

If the bfoundmerge marker is true, it is considered that a new candidate lane line is merged and generated, and it enters step S154. If the bfoundmerge marker is false, it is considered that no new candidate lane line is merged and generated, and iteration is finished.

Step S154, it is set that i=0, and the bfoundmerge marker is set to false.

i is zero or an integer greater than zero, and is configured to acquire the $(i+1)^{th}$ candidate lane line in the sequence of the candidate lane lines.

Step S155, whether i is less than the length of the sequence of the candidate lane lines is determined.

If i is less than the length of the sequence of the candidate lane lines, it enters step S156. If i is not less than the length of the sequence of the candidate lane lines, it enters step S1516.

Step S156, whether the $i^{th}$ candidate lane line has been merged is determined.

If the $i^{th}$ candidate lane line has been merged, it enters step S1514. If the $i^{th}$ candidate lane line has not been merged, it enters step S157.

Step S157, it is set that j=i+1.

j is zero or an integer greater than zero, and is configured to acquire the (i+1)$^{th}$ candidate lane line in the sequence of the candidate lane lines.

Step S158, whether j is equal to 1 is determined.

If j is equal to 1, it enters step S1515, and if j is not equal to 1, it enters step S159.

Step S159, whether the i$^{th}$ candidate lane line and the j$^{th}$ candidate lane line satisfy the merging condition is determined.

If the i$^{th}$ candidate lane line and the j$^{th}$ candidate lane line satisfy the merging condition, it enters step S1510. If the i$^{th}$ candidate lane line and the j$^{th}$ candidate lane line do not satisfy the merging condition, it enters step S1512.

Step S1510, the j$^{th}$ candidate lane line is merged into the i$^{th}$ candidate lane line.

In the embodiment of the present application, a merging sequence of the candidate lane line is set to increase the iteration efficiency.

Step S1511, the bmerged marker of the j$^{th}$ candidate lane line is set to true, and the bfoundmerge marker is set to true. After step S1511 is performed, it enters step S1515.

Step S1512, j=j+1.

Step S1513, whether a difference between the number of the candidate lane lines in the sequence of the candidate lane lines and j is 1 is determined.

If the difference between the number of the candidate lane lines in the sequence of the candidate lane lines and j is 1, it enters step S1514. If the difference between the number of the candidate lane lines in the sequence of the candidate lane lines and j is not 1, it returns to step S158.

Step S1514, it is set that j=0.

j is zero or an integer greater than zero, and is configured to acquire the (j+1)$^{th}$ candidate lane line in the sequence of the candidate lane lines. After step S1514 is performed, it returns to step S158.

Step S1515, i=i+1.

Step S1516, the candidate lane lines that have been merged from the sequence of the candidate lane lines are removed to obtain a sequence of new candidate lane lines.

Step S1517, whether the number of the candidate lane lines in the sequence of the candidate lane lines is less than 2 is determined.

If the number of the candidate lane lines in the sequence of the candidate lane lines is less than 2, iteration is finished. If the number of the candidate lane lines in the sequence of the candidate lane lines is not less than 2, it returns to step S155.

In some embodiments, in consideration of the fact that some lane lines have patterns in the actual operation scenario, pattern verification may also be performed on the lane lines that pass the second color verification to detect whether the patterns on the lane lines that pass the second color verification satisfy one of the preset pattern specifications, and the lane lines satisfying the preset pattern specification are used as the lane lines in the original image. The preset pattern specification is also prior information that may be determined according to the actual operation scenario of the autonomous mobile apparatus.

According to the lane line detection method provided by the embodiment of the present application, by calculating the gradient image based on a-color channel and the b-color channel corresponding to the image acquired by the camera, extracting the line segments at the one or more lane-line edges, and detecting the lane line in the original image according to the original line segments, illumination-invariant edge detection on the image may be achieved. For the challenging image with substantial reflected light and low contrast, the lane line detection method may extract relatively precise original line segments, so as to improve the accuracy and robustness of lane line detection. In addition, the lane line detection method, which has low requirements on image quality, may achieve accurate and reliable lane line detection using a camera with a low mounting height, which may reduce the height requirement for the autonomous mobile apparatus body, and thus, has high practicality. In addition, since the actual operation scenario of the autonomous mobile apparatus is typically a specific scenario, and the autonomous mobile apparatus does not travel in undetermined scenario like an automobile, the prior information of the actual operation scenario of the autonomous mobile apparatus may be acquired more conveniently, such as the preset lane line width specification, the preset lane line color specification, and the preset lane line pattern specification, such that the lane line detection method provided by the embodiment of the present application may improve the lane line detection performance by fully utilizing the prior information, so as to improve the accuracy of lane line detection.

It should be noted that although the width specification, the color specification, and the pattern specification for the lane lines are merely mentioned in the embodiment of the present application, it should be understood that if there are other specifications for the lane lines in the actual operation scenario, such as a lane line mode specification or a lane line background color specification, additional verification on other specifications may be performed on the lane lines according to actual requirements, so as to improve the accuracy of lane line detection.

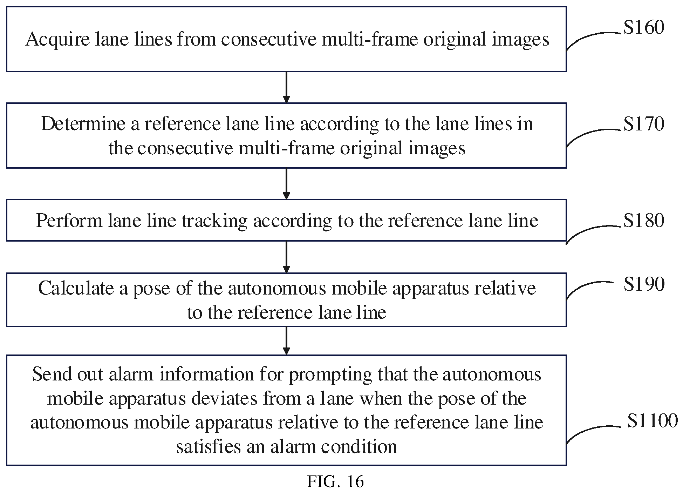

To enable the vehicle body to be kept inside the lane (between two lane lines) in a stably driving state or switch the lane, it helps to achieve a safe and smooth transition from the starting lane to the target lane. In some embodiments, referring to FIG. 16, after step S150, the lane line detection method provided by the embodiment of the present application further includes step S160 to step S1110 for tracking the lane lines.

Step S160, lane lines in consecutive multi-frame original images are acquired.

During movement of the autonomous mobile apparatus, upon acquiring the current frame original image output by the camera, the autonomous mobile apparatus will detect the lane line in the current frame original image according to the method including the aforementioned step S110 to step S150 to obtain the lane lines in consecutive multi-frame original images. When the lane lines in consecutive multi-frame original images are acquired, the reference lane line may be determined according to the multi-frame original image, and lane line tracking is started according to the reference lane line. The number of the multi-frame original images may be set according to the actual operation scenario and the actual autonomous mobile apparatus, which is not specifically limited herein.

Step S170, the reference lane line is determined according to the lane lines in consecutive multi-frame original images.

The reference candidate lane line may be determined from the lane lines in consecutive multi-frame original images. Exemplarily, for each lane line in the lane lines in consecutive multi-frame original images, the length of the current lane line may be calculated. If the length of the current lane line is greater than the preset length, the current lane line is used as the reference candidate lane line, where the preset length may be determined according to the actual operation scenario of the autonomous mobile apparatus, which is not specifically limited herein.

If one or more reference candidate lane lines are obtained, whether the one or more reference candidate lane lines are detected in the multi-frame original images may be detected. The reference candidate lane lines in the one or more reference candidate lane lines detected in the multi-frame original images are screened out, the distances between the screened reference lane lines and the autonomous mobile apparatus are calculated, and the reference candidate lane line closest to the autonomous mobile apparatus is determined as the reference lane line.

If one or more reference candidate lane lines are not obtained, or there are not reference candidate lane lines detected in the multi-frame original images, it returns to perform step S110 to step S170 until one or more reference candidate lane lines are obtained.

By determining the lane line that has a lane line length greater than the preset length, is closest to the autonomous mobile apparatus, and is detected in the consecutive multi-frame gradient images based on a and b channels as the reference lane line from the lane lines in the consecutive multi-frame original images, the lane line that is longer, is closer to the autonomous mobile apparatus, and is within a stable range of a field of view of the camera may be selected as the reference lane line, which facilitates lane line tracking.

Step S180, lane line tracking is performed according to the reference lane line.

During movement of the autonomous mobile apparatus, the at least one lane line in the current frame original image is acquired. For each lane line in the lane lines in the current frame original image, whether a distance between the current lane line and the reference lane line satisfies a position requirement is detected, where the position requirement may include that the lateral distance between the current lane line and the reference lane line is 0, and in this case, the current lane line and the reference lane line are collinear; whether a width of the current lane line is the same as a width of the reference lane line is detected; whether the color intensity distributions of pixels in the current lane line on the a-color channel and the b-color channel satisfy the preset lane line color specification is detected; and if the distance between the current lane line and the reference lane line satisfies the position requirement, the width of the current lane line is the same as the width of the reference lane line, and the color intensity distributions of pixels in the current lane line on the a-color channel and the b-color channel satisfy one of the preset lane line color specifications, it is determined that the current lane line matches the reference lane line.

If a lane line matching the reference lane line exists in the lane line in the current frame original image, the lane line matching the reference lane line is taken as a new reference lane line to update the new reference lane line; and if a lane line matching the reference lane line does not exist in the lane line in the current frame original image, the reference lane line is kept unchanged, and the new reference lane line is not updated.

If a prolonged update failure occurs after the reference lane line is updated for the last time, for example, the time interval from the last update time to the current duration is greater than a preset duration, the preset duration may be determined according to the actual operating scene of the autonomous mobile apparatus, such as 5 s. Alternatively, if a relatively large movement occurs to the autonomous mobile apparatus (for example, the autonomous mobile apparatus changes lanes, or the autonomous mobile apparatus undergoes sudden rapid acceleration, resulting in failure to find a lane line matching the reference lane line), the reference lane line fails, and it is necessary to determine the reference lane line again according to the method including step S110 to step S170 to initialize the reference lane line, so as to continuously perform lane line tracking according to the initialized reference lane line.

Step S190, a pose of the autonomous mobile apparatus relative to the reference lane line is calculated.

A lane line coordinate system is constructed according to the reference lane line; a vehicle body coordinate system and a camera coordinate system of the autonomous mobile apparatus are acquired; a transformation matrix between the vehicle body coordinate system and the camera coordinate system is calculated according to the lane line coordinate system, the vehicle body coordinate system and the camera coordinate system; and a pose of the autonomous mobile apparatus relative to the reference lane line is calculated according to the transformation matrix. A lane line coordinate system may be constructed by using a center line of the reference lane line and a perpendicular bisector of the center line. The origin of the lane line coordinate system is the center of the reference lane line. The vehicle body coordinate system is a coordinate system taking a rear axle center of the autonomous mobile apparatus as an origin, the orientation of the autonomous mobile apparatus as an x direction, and the left side of the autonomous mobile apparatus as a y direction.

Exemplarily, in a camera coordinate system x-y-z, an equation of the center line of the reference lane line is as follows:

$$x sin\theta - z cos\theta + c = 0, \quad \theta \in [-\pi/2, \pi/2),$$

where x represents coordinates of the center line of the reference lane line in the x direction; z represents coordinates of the center line of the reference lane line in the z direction; $\theta$ represents an included angle between the center line of the reference lane line and the x direction; and c represents a distance between the camera and the origin of the center line coordinate system.

Letting the lane line coordinate system be x'-O'-y', the coordinates of the camera in the camera coordinate system be $(x_c, z_c,$ coordinate system be $(t_x, 0, \alpha$ coordinate system be $(xl, yl, 1)$, the transformation matrix between the lane line coordinate system and the camera coordinate system is as follows:

$$\begin{bmatrix} xl \\ yl \\ 1 \end{bmatrix} = \begin{bmatrix} cos\alpha & sin\alpha & t_x \\ sin\alpha & cos\alpha & 0 \\ 0 & 0 & 1 \end{bmatrix} \begin{bmatrix} x_c \\ z_c \\ 1 \end{bmatrix} \quad \alpha \in [-\pi/2, \pi/2)$$

The following equations may be obtained:

$$0 = x_c cos\alpha - z_c sin\alpha + t_x$$

$$0 = x_c sin\theta - z_c cos\theta + c$$

For any $z_c$, $t_x sin\theta$ - $ccos\alpha$ + $z_c cos(\theta + \alpha)$ =

The following equation may be obtained: $\theta + \alpha = \pm \frac{\pi}{2}$

If

$$\theta > 0, \quad \alpha = \frac{\pi}{2} - \theta, \quad t_x = c$$

If

$$\theta \leq 0, \quad \alpha = -\frac{\pi}{2} - \theta, \quad t_x = -c$$

Letting the reference pose of the camera coordinate system relative to the autonomous mobile apparatus be $(x_b, y_b, \beta_b)$,

$$T_{Lb} = T_{Lc}T_{bc}^{-1}$$

$$= \begin{bmatrix} cos\alpha & sin\alpha & t_x \\ sin\alpha & cos\alpha & 0 \\ 0 & 0 & 1 \end{bmatrix} \begin{bmatrix} cos\beta_b & -sin\beta_b & x_b \\ sin\beta_b & cos\beta_b & y_b \\ 0 & 0 & 1 \end{bmatrix}^{-1}$$

$$= \begin{bmatrix} cos\alpha & sin\alpha & t_x \\ sin\alpha & cos\alpha & 0 \\ 0 & 0 & 1 \end{bmatrix} \begin{bmatrix} cos\beta_b & sin\beta_b & -x_b cos\beta_b - y_b sin\beta_b \\ -sin\beta_b & cos\beta_b & x_b sin\beta_b - y_b cos\beta_b \\ 0 & 0 & 1 \end{bmatrix}$$

$$= \begin{bmatrix} cos(\alpha - \beta_b) & -sin(\alpha - \beta_b) & t_x - x_b cos(\alpha - \beta_b) + y_b sin(\alpha - \beta_b) \\ sin(\alpha - \beta_b) & cos(\alpha - \beta_b) & -x_b sin(\alpha - \beta_b) - y_b cos(\alpha - \beta_b) \\ 0 & 0 & 1 \end{bmatrix}$$

where $L$ represents the lane line coordinate system; $b$ represents the vehicle body coordinate system; c represents the camera coordinate system; $T_{Lb}$ refers to the transformation matrix that transforms the lane line coordinate system into the vehicle body coordinate system; $T_{Lc}$ refers to a transformation matrix that transforms the lane line coordinate system into the camera coordinate system; and $T_{bc}^{-1}$ refers to an inverse matrix of the transformation matrix that transforms the vehicle body coordinate system into the camera coordinate system, that is, a transformation matrix that transforms the camera coordinate system into the vehicle body coordinate system.

The pose of the autonomous mobile apparatus body relative to the reference lane line (the center line) is as follows:

$$(x_b, y_b, \beta_b) = (t_x - x_b cos(\alpha - \beta_b) + y_b sin(\alpha - \beta_b), -x_b sin(\alpha - \beta_b) - y_b cos(\alpha - \beta_b), \alpha - \beta_b)$$

Step S1100, alarm information for prompting that the autonomous mobile apparatus deviates from a lane is sent out in response to the pose of the autonomous mobile apparatus relative to the reference lane line satisfies an alarm condition.

If the abscissa of the autonomous mobile apparatus in the pose relative to the reference lane line is located in the positive direction of the horizontal axis of the lane line coordinate system, and the angle of the pose is greater than the preset angle (such as 90 degrees), it is determined that the pose characterizes that the autonomous mobile apparatus is approaching the reference lane line; or the abscissa of the autonomous mobile apparatus relative to the pose of the reference lane line is located in the negative direction of the horizontal axis of the lane line coordinate system, and the angle of the pose is less than the preset angle (such as 90 degrees), it is determined that the pose characterizes that the autonomous mobile apparatus is approaching the reference lane line. When the pose characterizes that the autonomous mobile apparatus is approaching the reference lane line and the distance between the autonomous mobile apparatus and the reference lane line is smaller than a preset minimum distance (set according to the actual operating scenario, such as 5 cm or 10 cm), the pose of the autonomous mobile apparatus relative to the reference lane line satisfies the alarm condition, and in this case, the alarm information for prompting that the autonomous mobile apparatus deviates from a lane is sent out.

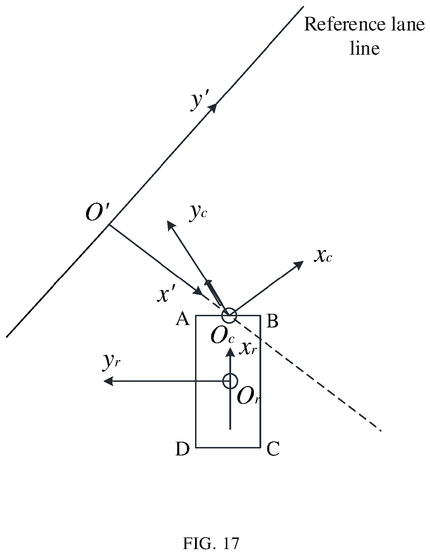

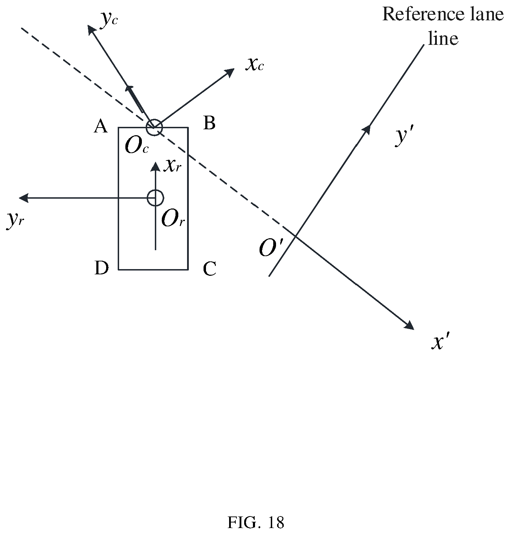

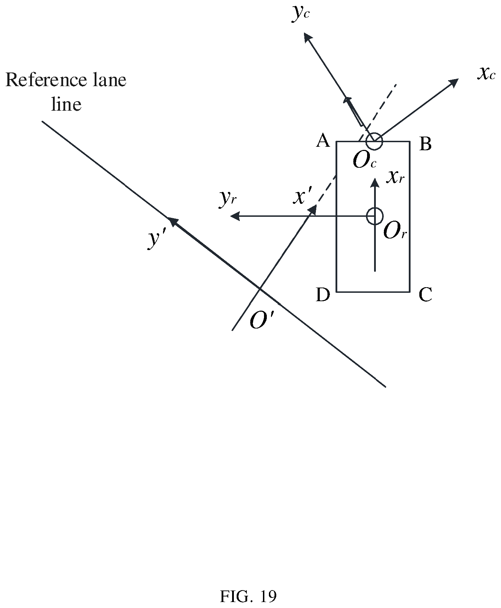

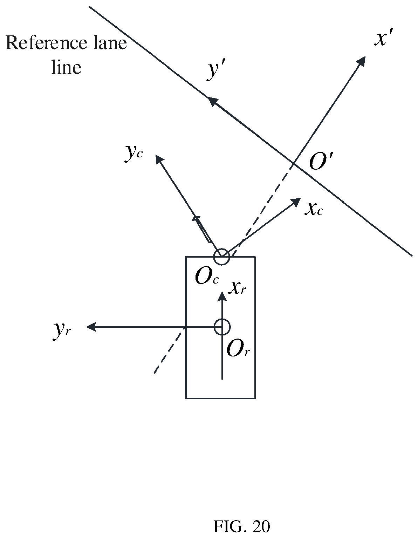

Exemplarily, referring to FIGS. 17-20, in FIGS. 17-20, the coordinate system x'-O'-y' is the lane line coordinate system, the coordinate system $x_c$-$O_c$-$y_c$ is the camera coordinate system, and the coordinate system $x_r$-$O_r$-$y_r$ is the vehicle body coordinate system, and the rectangle ABCD characterizes the autonomous mobile apparatus. The lane line keeping includes four conditions shown in FIGS. 17-20, where in conditions shown in FIG. 17 and FIG. 20, the autonomous mobile apparatus is approaching the reference lane line, and when $|x_b|$ is greater than the preset minimum distance, a lane deviation alarm is sent out.

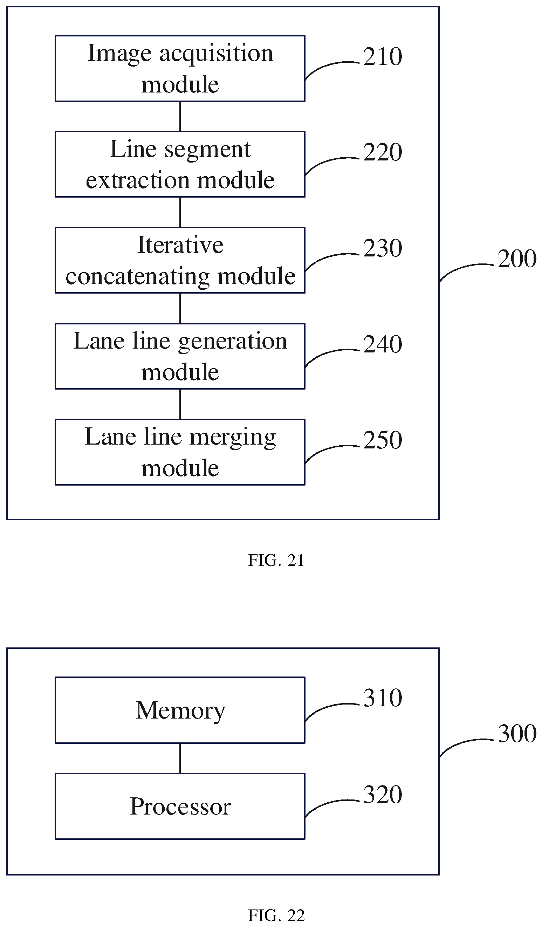

Referring to FIG. 21, FIG. 21 shows a structural block diagram of a lane line detection apparatus provided by an embodiment of the present application. The lane line detection apparatus 200 may be applied to the autonomous mobile apparatus. The lane line detection apparatus 200 includes an image acquisition module 210, a line segment extraction module 220, an iterative concatenating module 230, a lane line generation module 240, and a lane line merging module 250.

The image acquisition module 210 is configured to acquire an original image captured by a camera of an autonomous mobile apparatus, and calculate a gradient image based on a and b channels according to the original image. A specific working process of the image acquisition module 210 refers to the aforementioned step S110.

The line segment extraction module 220 is configured to extract line segments located at one or more lane-line edges from the gradient image based on a and b channels to obtain a plurality of original line segments. A specific working process of the line segment extraction module 220 refers to the aforementioned step S120.

The iterative concatenating module 230 is configured to concatenate collinear line segments among the plurality of original line segments using an iterative method to obtain a plurality of concatenated line segments. A specific working process of the iterative concatenating module 230 refers to the aforementioned step S130.

The lane line generation module 240 is configured to generate a plurality of candidate lane lines from the plurality of concatenated line segments. A specific working process of the lane line generation module 240 refers to the aforementioned step S140.

The lane line merging module 250 is configured to merge the plurality of candidate lane lines to obtain a lane line in the original image. A specific working process of the lane line merging module 250 refers to the aforementioned step S150.

In some embodiments, the lane line detection apparatus 200 further includes a lane line tracking module, configured to perform the aforementioned step S160 to step S180, and a specific working process of the lane line tracking module refers to the aforementioned step S150.

In some embodiments, the lane line detection apparatus 200 further includes a lane keeping monitoring module, configured to perform the aforementioned step S190 to step S1100, and a specific working process of the lane keeping monitoring module refers to the aforementioned step S190 to step S1100.

Those skilled in the art may clearly understand that the lane line detection apparatus 200 provided by the embodiment of the present application can implement the lane line detection method provided by the embodiment of the present application. For the specific working processes of the aforementioned devices and modules, reference may be made to the corresponding processes of the methods described in the embodiments of the present application, which are not repeated herein.

In the embodiments provided herein, the coupling, direct coupling, or communicative connection between the displayed or discussed modules may be indirect coupling or communicative coupling implemented via certain interfaces, devices, or modules, and may be in electrical, mechanical, or other forms, which is not specifically limited in the embodiments of the present application.

In addition, each functional module in the embodiments of the present application may be integrated into one processing module, or each module may exist as an independent physical entity, or two or more modules may be integrated into a single module. The aforementioned integrated modules may be implemented in the form of hardware, or in the form of software functional modules.

Referring to FIG. 22, FIG. 22 shows a structural block diagram of an autonomous mobile apparatus provided by the embodiment of the present application. The autonomous mobile apparatus 300 may include a memory 310 and a processor 320, the memory 310 storing an application, and the application being configured to, when invoked by the processor 320, perform the method provided in the embodiment of the present application.

The processor 320 may include one or more processing cores. The processor 320 connects various components within the entire autonomous mobile apparatus 300 by means of various interfaces and lines, and is configured to run or execute instructions, programs, code sets or instruction sets stored in the memory 310, as well as invoke, run or execute data stored in the memory 310, so as to perform various functions and process data of the autonomous mobile apparatus 300. The processor 320 may be implemented in at least one hardware form of digital signal processing (DSP), a field-programmable gate array (FPGA), and a programmable logic array (PLA). The processor 320 may be integrated with one of or a combination of more of a central processing unit (CPU), a graphics processing unit (GPU), and a modem. The CPU mainly processes the operating system, the user interface, the applications, and the like; the GPU is mainly responsible for rendering and drawing display contents; and the modem is used for processing wireless communication. It may be understood that the aforementioned modem may also be not integrated in the processor 320, and is implemented independently via a communication chip.

the memory 310 may include either a random access memory (RAM) or a read-only memory (ROM). The memory 310 may be configured to store instructions, programs, codes, code sets or instruction sets. The memory 310 may include a program storage area and a data storage area. The program storage area may store instructions configured to implement the operating system, instruction configured to implement at least one function, instructions configured to implement the aforementioned method embodiments, and the like. The data storage area may store data created in use of the autonomous mobile apparatus 300.

An embodiment of the present application further provides a computer-readable storage medium, where the computer-readable storage medium stores a program code, and the program code is configured to, when invoked by a processor, implement the method provided by the embodiment of the present application. The computer-readable storage medium may be an electronic memory such as a flash memory, an electrically-erasable programmable read-only memory (EEPROM), an erasable programmable read-only memory (EPROM), a hard disc, or an ROM.

In some embodiments, the computer-readable storage medium may include a non-transitory computer-readable storage medium (Non-TCRSM). The computer-readable storage medium has a storage space for program codes that execute any of the method steps described above. These program codes may be read from or written into one or more computer program products. The program codes may be compressed in a suitable form.

Finally, it should be noted that the above embodiments are only used to illustrate the technical solutions of the present application, rather than limiting the same; although the present application has been described in detail with reference to the aforementioned embodiments, those of ordinary skill in the art should understand that they can still modify the technical solutions recorded in each of the aforementioned embodiments or equivalently replace some of the technical features therein; and such modifications or replacements do not deviate the corresponding technical solutions from the spirit and scope of the technical solutions of each embodiment of the present application.

**Claims**

1. A lane line detection method, comprising:

   acquiring an original image captured by a camera of an autonomous mobile apparatus, and calculating a gradient image based on a and b channels according to the original image;
   extracting line segments located at one or more lane-line edges from the gradient image based on the a and b channels to obtain a plurality of original line segments;
   concatenating collinear line segments among the plurality of original line segments using an iterative method to obtain a plurality of concatenated line segments;
   generating a plurality of candidate lane lines from the plurality of concatenated line segments; and
   merging the plurality of collinear candidate lane lines to obtain at least one lane line in the original image.

2. The method according to claim 1, wherein the step of concatenating the collinear line segments among the plurality of original line segments using the iterative method to obtain the plurality of concatenated line segments comprises:

   transforming the plurality of original line segments into a ground coordinate system, and respectively calculating included angles between the plurality of original line segments and a horizontal axis of the ground coordinate system as respective direction angles of the plurality of original line segments;
   sorting the plurality of original line segments according to the direction angles of the plurality of original line segments to obtain a sequence of the plurality of original line segments; and
   sequentially concatenating the collinear line segments among the plurality of original line segments using the iterative method according to the sequence of the plurality of original line segments to obtain the plurality of concatenated line segments.

3. The method according to claim 2, wherein prior to the step of sequentially concatenating the collinear line segments among the plurality of original line segments using the iterative method according to the sequence of the plurality of original line segments to obtain the plurality of concatenated line segments, the method further comprises:

   determining a preferred direction of the at least one lane line according to the direction angles of the plurality of original line segments; and
   selecting at least one original line segment with the preferred direction of the at least one lane line or at least one original line segment with a length greater than a length threshold from the plurality of original line segments as at least one preferred line segment, and setting a preferred marker of each of the at least one preferred line segment to a true; and
   wherein the step of sequentially concatenating the collinear line segments among the plurality of original line segments using the iterative method according to the sequence of the plurality of original line segments to obtain the plurality of concatenated line segments comprises:
   sequentially concatenating the collinear line segments among the plurality of original line segments using the iterative method according to the sequence of the plurality of original line segments to obtain the plurality of concatenated line segments, wherein each iteration involves concatenating of two line segments, the two line segments comprise a first line segment and a second line segment, and a preferred marker of the first line segment is the true and the first line segment is not merged.

4. The method according to claim 3, wherein the step of sequentially concatenating the collinear line segments among the plurality of original line segments using the iterative method according to the sequence of the plurality of original line segments to obtain the plurality of concatenated line segments comprises:

during a first iteration, acquiring a first preferred line segment from the sequence of the plurality of original line segments as the first line segment involved in the first iteration;

searching for the second line segment satisfied concatenating conditions of original line segments;

if the second line segment is found, merging the first line segment and the second line segment according to a number of original line segments respectively comprised in each of the first line segment and the second line segment to obtain a concatenated line segment obtained in this iteration; setting a preferred marker of the concatenated line segment obtained in this iteration to true, taking the concatenated line segment obtained in this iteration as a first line segment in a next iteration, entering the next iteration, and repeatedly performing the step of searching for the second line segment satisfied concatenating conditions of the original line segments until an iteration termination condition is satisfied, to obtain the plurality of concatenated line segments; and

if the second line segment is not found, setting the preferred marker of the first line segment to a false, entering a next iteration, and continuously determining a first line segment involved in the next iteration again from the at least one preferred line segment according to the sequence of the plurality of original line segments until the iteration termination condition is satisfied, to obtain the plurality of concatenated line segments.

5. The method according to claim 4, wherein the step of merging the first line segment and the second line segment according to the number of the original line segments respectively comprised in each of the first line segment and the second line segment to obtain the concatenated line segment obtained in this iteration comprises:

if the number of the original line segments comprised in the first line segment is greater than or equal to the number of the original line segments comprised in the second line segment, merging the second line segment into the first line segment to obtain the concatenated line segments obtained in this iteration; and

if the number of the original line segments comprised in the first line segment is less than the number of the original line segments comprised in the second line segment, merging the first line segment into the second line segment to obtain the concatenated line segments obtained in this iteration.

6. The method according to claim 4 or 5, wherein the step of searching for the second line segment satisfied the concatenating conditions of the original line segments comprises:

if a direction angle difference between the second line segment and the first line segment is less than a preset angle, a preset lane line width specification of a lateral distance between the second line segment and the first line segment is less than a preset lateral distance error, and a longitudinal distance between the second line segment and the first line segment in a line segment direction is less than a preset spacing, determining that the second line segment satisfied the concatenating conditions of the original line segments is found.

7. The method according to any one of claims 1-6, wherein the step of generating the plurality of candidate lane lines from the plurality of concatenated line segments comprises:

acquiring a preset lane line width specification and a preset lane line color specification;

selecting a plurality of line segment pairs from the plurality of concatenated line segments according to the preset lane line width specification, each of the plurality of line segment pairs comprising two concatenated line segments;

performing a first color verification on the plurality of line segment pairs according to the preset lane line color specification; and

generating a plurality of candidate lane lines according to a plurality of line segment pairs passing the first color verification, each of the plurality of line segment pairs passing the first color verification corresponding to one candidate lane line.

8. The method according to claim 7, wherein the step of selecting the plurality of line segment pairs from the plurality of concatenated line segments according to the preset lane line width specification comprises:

respectively calculating included angles between the plurality of concatenated line segments and the horizontal axis of the ground coordinate system as respective direction angles of the plurality of concatenated line segments;

sorting the plurality of concatenated line segments according to the direction angles of the plurality of concatenated line segments to obtain a sequence of the plurality of concatenated line segments; and

sequentially selecting a plurality of line segment pairs from the plurality of concatenated line segments according to the sequence of the plurality of concatenated line segments, a direction angle difference between two line segments comprised in each of the line segments being less than the preset angle, and a lateral distance between the two line segments comprised in each of the line segments satisfying the preset lane line width specification.

9. The method according to claim 7 or 8, wherein the step of performing the first color verification on the plurality of line segment pairs according to the preset lane line color specification comprises:

for each of the plurality of line segment pairs, acquiring color intensity distributions of two original line segments comprised in a current line segment pair on an a-color channel and a b-color channel; and
if the color intensity distributions satisfy the preset lane line color specification, determining that the current line segment pair passes the first color verification.

10. The method according to any one of claims 1-9, wherein the step of merging the plurality of collinear candidate lane lines to obtain the at least one lane line in the original image comprises:

merging the collinear candidate lane lines in the plurality of candidate lane lines to obtain a plurality of long lane lines; and
performing a second color verification on the plurality of long lane lines, and at least one long lane line passing the second color verification being the at least one lane line in the original image.

11. The method according to claim 10, wherein the step of merging the collinear candidate lane lines in the plurality of candidate lane lines to obtain the plurality of long lane lines comprises:

respectively calculating included angles between the plurality of candidate lane lines and the horizontal axis of the ground coordinate system as respective direction angles of the plurality of candidate lane lines;
sorting the plurality of candidate lane lines according to the respective direction angles of the plurality of candidate lane lines to obtain a sequence of the plurality of candidate lane lines; and
sequentially merging the collinear candidate lane lines among the plurality of candidate lane lines according to the sequence of the plurality of candidate lane lines to obtain the plurality of long lane lines.

12. The method according to claim 10 or 11, wherein the step of performing the second color verification on the plurality of long lane lines to obtain the at least one lane lines in the original image comprises:

for each of the plurality of long lane lines, finding at least one pair of original line segments from a current long lane line;
acquiring color intensity distributions of an area between two line segments comprised in the at least one pair of original line segments on an a-color channel and a b-color channel; and
if the color intensity distributions satisfy the preset lane line color specification, determining that the current long lane line passes the second color verification.

13. The method according to any one of claims 1-12, wherein the step of acquiring the original image captured by the camera of the autonomous mobile apparatus, and calculating the gradient image based on the a and b channels according to the a-color channel and the b-color channel corresponding to the original image comprises:

acquiring the original image captured by the camera of the autonomous mobile apparatus;
converting the original image into a Lab image; and
constructing a gradient image using a graphics processing unit (GPU) acceleration method of a DiZenzo operator according to the a-color channel and the b-color channel of the Lab image to obtain the gradient image based on the a and b channels.

14. The method according to claim 13, wherein in a case that the autonomous mobile apparatus is located on a ground, a distance between the camera and the ground is less than a specified height, and an orientation of the camera forms an included angle smaller than a specified angle with the ground.

15. The method according to any one of claims 1-14, wherein after the step of merging the plurality of collinear candidate lane lines to obtain the at least one lane line in the original image, the method further comprises:

acquiring lane lines in consecutive multi-frame original images;
determining a reference lane line according to the lane lines in the consecutive multi-frame original images; and
performing a lane line tracking according to the reference lane line.

16. The method according to claim 15, wherein the step of determining the reference lane line according to the lane lines in the consecutive multi-frame original images comprises:
determining the lane line having a lane line length greater than the preset length, closest to the autonomous mobile apparatus, and detected in consecutive multi-frame gradient images based on the a and b channels as the reference lane line from the lane lines in the consecutive multi-frame original images.

17. The method according to claim 15 or 16, wherein the step of performing the lane line tracking according to the reference lane line comprises:

acquiring at least one lane line in a current frame original image in a moving process of the autonomous mobile apparatus;
if a lane line matching the reference lane line exists in the at least one lane line in the current frame original image, taking the lane line matching the reference lane line as a new reference lane line to update the reference lane line; and
if a lane line matching the reference lane line does not exist in the at least one lane line in the current frame original image, keeping the reference lane line unchanged, and not updating the reference lane line.

18. The method according to claim 17, wherein after the step of acquiring the at least one lane line in the current frame original image, the method further comprises:

for each of the at least one lane line in the current frame original image, detecting whether a distance between a current lane line and the reference lane line satisfies a position requirement;
detecting whether a width of the current lane line is same as a width of the reference lane line;
detecting whether color intensity distributions of pixels in the current lane line on the a-color channel and the b-color channel satisfy the preset lane line color specification; and
if the distance between the current lane line and the reference lane line satisfies the position requirement, the width of the current lane line is same as the width of the reference lane line, and the color intensity distributions of the pixels in the current lane line on the a-color channel and the b-color channel satisfy the preset lane line color specification, determining that the current lane line matches the reference lane line.

19. The method according to any one of claims 15-18, wherein after the step of determining a reference lane line according to the lane lines in the consecutive multi-frame original images, the method further comprises:

calculating a pose of the autonomous mobile apparatus relative to the reference lane line; and
in response to the pose satisfies an alarm condition, sending out an alarm information for prompting that the autonomous mobile apparatus deviates from a lane.

20. The method according to claim 19, wherein the step of calculating the pose of the autonomous mobile apparatus relative to the reference lane line comprises:

constructing a lane line coordinate system according to the reference lane line;
acquiring a vehicle body coordinate system and a camera coordinate system of the autonomous mobile apparatus;
calculating a transformation matrix between the vehicle body coordinate system and the camera coordinate system according to the lane line coordinate system, the vehicle body coordinate system, and the camera coordinate system; and
calculating the pose of the autonomous mobile apparatus relative to the reference lane line according to the transformation matrix.

21. The method according to claim 19 or 20, where after the step of sending out the alarm information for prompting that the autonomous mobile apparatus deviates from the lane in a case that the pose satisfies the alarm condition, the method further comprises:
in a case that the pose characterizes that the autonomous mobile apparatus is approaching the reference lane line and a distance between the autonomous mobile apparatus and the reference lane line is less than a preset minimum distance, sending out the alarm information for prompting that the autonomous mobile apparatus deviates from the lane.

22. The method according to claim 20 or 21, wherein prior to the step of sending out the alarm information for prompting that the autonomous mobile apparatus deviates from the lane when the pose satisfies the alarm condition, the method further comprises:

if an abscissa in the pose is located in a positive direction of a horizontal axis of the lane line coordinate system and an angle in the pose is greater than a preset angle, determining that the pose characterizes that the autonomous mobile apparatus is approaching the reference lane line; or
if an abscissa in the pose is located in a negative direction of the horizontal axis of the lane line coordinate system and the angle in the pose is less than the preset angle, determining that the pose characterizes that the autonomous mobile apparatus is approaching the reference lane line.

23. A lane line detection apparatus, comprising:

an image acquisition module configured to acquire an original image captured by a camera of an autonomous mobile apparatus, and calculate a gradient image based on a and b channels according to the original image;
a line segment extraction module configured to extract line segments located at one or more lane-line edges from the gradient image based on the a and b channels to obtain a plurality of original line segments;
an iterative concatenating module configured to concatenate collinear line segments among the plurality of original line segments using an iterative method to obtain a plurality of concatenated line segments;
a lane line generation module configured to generate a plurality of candidate lane lines from the plurality of concatenated line segments; and
a lane line merging module configured to merge the plurality of collinear candidate lane lines to obtain at least one lane line in the original image.

24. An autonomous mobile apparatus, comprising:
a memory and a processor, the memory storing an application, and the application being configured to, when invoked by the processor, perform the method according to any one of claims 1-23.

25. A computer-readable storage medium, wherein a program code is stored in the computer-readable storage medium, and the program code is configured to, when invoked by a processor, perform the method according to any one of claims 1-23.

| | |
|---|---|
| Autonomous mobile apparatus body | 110 |
| Camera | 120 |
| Illumination-invariant line segment extraction module | 130 |
| Iterative collinear line segment detection module | 140 |
| Candidate lane line search module | 150 |
| Candidate lane line merging module | 160 |
| Lane line tracking module | 170 |
| Lane keeping monitoring module | 180 |

100

**FIG. 1**

Illumination-invariant line segment
extraction operation

↓

Iterative concatenated collinear line
segment operation

↓

Candidate lane line search
operation

↓

Candidate lane line merging
operation

↓

Lane line tracking operation

↓

Lane keeping monitoring operation

**FIG. 2**

Acquire an original image captured by a camera of an autonomous mobile apparatus, and calculate a gradient image based on a and b channels according to the original image — S110

Extract line segments located at one or more lane-line edges from the gradient image based on the a and b channels to obtain a plurality of original line segments — S120

Concatenate collinear line segments among the plurality of original line segments using an iterative method to obtain a plurality of concatenated line segments — S130

Generate a plurality of candidate lane lines from the plurality of concatenated line segments — S140

Merge the plurality of collinear candidate lane lines to obtain at least one lane line in the original image — S150

**FIG. 3**

**FIG. 4**

**FIG. 5**

**FIG. 6**

**FIG. 7**

**FIG. 8**

Edge line
segments

FIG. 9

Number of line
segments

Direction
angle

FIG. 10

EP 4 783 123 A1

Determine a preferred direction of a lane line — S131

Set bprefered markers of the edge line segments and the long original line segments with the preferred direction of the lane line to true — S132

Sort the line segments according to the direction angles of the line segments to form a sequence — S133

Set a bnewConcatenation marker to true — S134

Whether the bnewConcatenation is true — S135 — No → Finish / Yes

Set the bnewConcatenation marker to false — S136

Acquire an $i^{th}$ line segment in the sequence as a first line segment — S137

Whether a bprefered marker of the first line segment is true — S138 — No → i=i+1 — S1321 / Yes

Whether a bmerged marker of the first line segment is true — S139 — Yes

Set the bprefered marker of the first line segment to false, k=i+1, set a bforward marker to true — S1310

Determine whether k is less than a sequence length — S1311

Use a $k^{th}$ line segment as a second line segment — S1312

Whether a bmerged marker of the first line segment is true — S1313 — Yes

Whether the direction angle is greater than a preset angle — S1314 — Yes

Whether a lateral distance is less than a preset lateral distance error — S1315 — No

Whether a spacing ratio is less than a preset ratio — S1316 — No

Whether the number of the edge Line segments included in the first line segment is greater than or equal to that in the second line segment — S1317 — No

After the second line segment is merged into the first line segment, set the bprefered marker of the first line segment to true, and set the bmerged marker of the second line segment to true — S1318

Whether i is less than the sequence length — S1322 — No

Set k=0, set the bforward marker to false — S1323

Whether k is less than i — S1324 — Yes

Whether k is less than the sequence length — S1327 — No

k=k+1 — S1325

Whether the bforward marker is true — S1326 — Yes

After the first line segment is merged into the second line segment, set the bprefered marker of the second line segment to true, and set the bmerged marker of the first line segment to true — S1319

Set a bnewConcatenation marker to true — S1320

FIG. 11

Sort according to the direction angles of the plurality of concatenated line segments to obtain a sequence of the concatenated line segments — S141

Calculate the length of the concatenated line segments, and set i-0 — S142

Set the ith line segment in the sequence of the concatenated line segments as the first concatenated line segment — S143

Output a plurality of candidate lane lines

Whether i is less than the sequence length of the concatenated line segments — S1415 No

Yes

Whether the bprefered marker of the first concatenated line segment is true — S144 No

i=i+1 — S1414

Yes

K=i+1, set the bforward marker to true — S145

Whether k is less than i — S1418 No

Yes

Set k=0, set the bforward marker to false — S147 No

Whether k is less than the sequence length of the concatenated line segments — S146

Yes

Whether the bforward marker of the kth concatenated line segment is true — S1417 No

Set the kth line segment in the sequence of the concatenated line segments as the second concatenated line segment — S148

Yes

Whether the bmatchable marker of the second concatenated line segment is true — S149 No

k=k+1 — S1416

Yes

Whether the direction angle difference is less than a preset angle — S1410 No

Yes

Whether the first and second concatenated line segments satisfy the preset lane line width specification — S1411 No

Yes

Whether the first and second Concatenated line segments satisfy the preset lane line color specification — S1412 No

Yes

Construct a candidate lane line according to the first concatenated line segment and the second concatenated line segment — S1413

FIG. 12

FIG. 13

FIG. 14

S151

Whether the number of the candidate lane lines in the sequence of the candidate lane lines is greater than 1

No → Finish

Yes

S152

Sort according to the direction angles of the plurality of candidate lane lines to form the sequence of the candidate lane lines

S153

Whether the bfoundmerge marker is true

Yes

S154

Set i=0, set the bfoundmerge marker to false

S155

Whether i is less than the length of the sequence of the candidate lane lines

No

Yes

S156

Whether the i$^{th}$ candidate lane line has been merged

Yes

No

S157

j=i+1

S158

Whether j is equal to 1

Yes

No

S1510

After merge the j$^{th}$ candidate lane line into the i$^{th}$ candidate lane line

Yes

S159

Whether the i$^{th}$ and j$^{th}$ candidate lane lines satisfy a merging condition

No

S1512

j=j+1

set the bmerged marker of the ith candidate lane line to true, and set the bfoundmerge marker to true

S1511

S1513

Whether a difference Value between the number of the candidate lane lines in the sequence of the candidate lane lines and i is 1

No

Yes

S1515

i=i+1

S1514

j=0

S1516

Remove the candidate lane lines that have been merged from the sequence of the candidate lane lines to obtain a sequence of new candidate lane lines

S1517

Whether the number of the Candidate lane lines in the sequence of the new candidate lane lines is less than 2

No

Yes

FIG. 15

Acquire lane lines from consecutive multi-frame original images — S160

Determine a reference lane line according to the lane lines in the consecutive multi-frame original images — S170

Perform lane line tracking according to the reference lane line — S180

Calculate a pose of the autonomous mobile apparatus relative to the reference lane line — S190

Send out alarm information for prompting that the autonomous mobile apparatus deviates from a lane when the pose of the autonomous mobile apparatus relative to the reference lane line satisfies an alarm condition — S1100

FIG. 16

FIG. 17

$y_c$

$x_c$

Reference lane
line

A

B

$O_c$

$y'$

$x_r$

$y_r$

$O_r$

$O'$

D

C

$x'$

FIG. 18

$y_c$

$x_c$

Reference lane
line

A    B

$O_c$

$y_r$    $x'$    $x_r$

$y'$    $O_r$

D    C

$O'$

FIG. 19

Reference lane
line

$x'$

$y'$

$O'$

$y_c$

$x_c$

$O_c$

$x_r$

$y_r$

$O_r$

FIG. 20

Image acquisition module ⌐ 210

Line segment extraction module ⌐ 220

Iterative concatenating module ⌐ 230 ⌐ 200

Lane line generation module ⌐ 240

Lane line merging module ⌐ 250

FIG. 21

Memory ⌐ 310

⌐ 300

Processor ⌐ 320

FIG. 22

## INTERNATIONAL SEARCH REPORT

| International application No. |
| --- |
| **PCT/CN2023/119740** |

**A. CLASSIFICATION OF SUBJECT MATTER**

G06V20/56(2022.01)i

According to International Patent Classification (IPC) or to both national classification and IPC

**B. FIELDS SEARCHED**

Minimum documentation searched (classification system followed by classification symbols)

IPC: G06V, G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 车道线, 检测, 图像, 梯度, 线段, 迭代, 级联, 候选, 合并, 坐标, 方向, 颜色, 夹角, dizenzo, lane line, detection, image, gradient, segment, iteration, cascade, candidate, merge, coordinate, direction, color, angle

**C. DOCUMENTS CONSIDERED TO BE RELEVANT**

| Category* | Citation of document, with indication, where appropriate, of the relevant passages | Relevant to claim No. |
| --- | --- | --- |
| X | CN 113343746 A (GM GLOBAL TECHNOLOGY OPERATIONS LLC) 03 September 2021 (2021-09-03) figures 2-1 to figure 3 and figure 9, and description, paragraphs 43-87 | 1-2, 13-17, 19-25 |
| A | CN 106228125 A (ZHEJIANG GONGSHANG UNIVERSITY) 14 December 2016 (2016-12-14) entire document | 1-25 |
| A | CN 102156979 A (SHANGHAI DIANJI UNIVERSITY) 17 August 2011 (2011-08-17) entire document | 1-25 |
| A | CN 112699711 A (ZHUHAI GREE ELECTRIC APPLIANCES INC.) 23 April 2021 (2021-04-23) entire document | 1-25 |
| A | CN 116385989 A (HOZON NEW ENERGY AUTOMOBILE CO., LTD.) 04 July 2023 (2023-07-04) entire document | 1-25 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 March 2024** | **21 March 2024** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/119740** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007219767 A (NATIONAL INSTITUTE OF ADVANCED INDUSTRIAL & TECHNOLOGY) 30 August 2007 (2007-08-30) <br> entire document | 1-25 |

Form PCT/ISA/210 (second sheet) (July 2022)

**INTERNATIONAL SEARCH REPORT**
Information on patent family members

International application No.

**PCT/CN2023/119740**

| Patent document cited in search report | | | Publication date (day/month/year) | Patent family member(s) | | | Publication date (day/month/year) |
|---|---|---|---|---|---|---|---|
| CN | 113343746 | A | 03 September 2021 | DE | 102021102785 | A1 | 09 September 2021 |
|    |           |   |                   | US | 2021276574    | A1 | 09 September 2021 |
|    |           |   |                   | US | 11731639      | B2 | 22 August 2023 |
| CN | 106228125 | A | 14 December 2016 | CN | 106228125 | B | 14 May 2019 |
| CN | 102156979 | A | 17 August 2011 | CN | 102156979 | B | 04 July 2012 |
| CN | 112699711 | A | 23 April 2021 | None | | | |
| CN | 116385989 | A | 04 July 2023 | None | | | |
| JP | 2007219767 | A | 30 August 2007 | None | | | |

Form PCT/ISA/210 (patent family annex) (July 2022)